(19)

Europäisches
Patentamt
European
Patent Office
Office européen
des brevets

(11) **EP 2 712 780 B1**

(12) **EUROPEAN PATENT SPECIFICATION**

(45) Date of publication and mention
of the grant of the patent:
**04.04.2018  Bulletin 2018/14**

(51) Int Cl.:
***B60T 8/1755*** (2006.01)

(21) Application number: **12186640.4**

(22) Date of filing: **28.09.2012**

(54) **Method and apparatus for performing driving assistance**

Verfahren und Vorrichtung zur Fahrunterstützung

Procédé et appareil permettant de mettre en oeuvre une aide à la conduite

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.04.2014  Bulletin 2014/14**

(73) Proprietor: **Hitachi, Ltd.
Tokyo 100-8280 (JP)**

(72) Inventors:
• **Takahashi, Junya
  81925 Munich (DE)**

• **Yamakado, Makoto
  Hitachinaka-city, Ibaraki (JP)**
• **Yokoyama, Atsushi
  Hitachinaka-city (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 2 484 572     EP-A1- 2 492 160
EP-A2- 1 992 537**

EP 2 712 780 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention relates to a method and an apparatus for performing driving assistance for a vehicle.

**Background**

In the prior art of performing driving assistance for a vehicle, there are known the concepts of so-called Electronic Stability Control (ESC), also referred to as Electronic Stability Program (ESP) or Dynamic Stability Control (DSC), which is a computer-implemented control technology for improving the safety of a vehicle's stability by detecting and reducing loss of traction, wherein the control target is the yaw moment of the vehicle.

Recently, according to EP 1 992 537 A2, another concept for performing driving assistance for a vehicle was proposed, which concept (referred to as e.g. G-Vectoring Control, GVC) can be provided alternatively or also additionally to the above-mentioned Electronic Stability Control (ESC), in which the control target is the longitudinal acceleration of the vehicle and the control is based on a lateral acceleration and lateral jerk of the vehicle.

Specifically, according to a control concept, a lateral acceleration of the vehicle, which is an acceleration of the vehicle in a lateral direction perpendicular to a longitudinal direction of the vehicle corresponding to a moving direction of the vehicle, and a lateral jerk of the vehicle, which is a jerk of the vehicle in the lateral direction, are determined. Based on the determined lateral acceleration and lateral jerk, a longitudinal acceleration of the vehicle is controlled.

While the principle concept of control of longitudinal acceleration of the vehicle and the control on the basis of lateral jerk has been developed, it is desirable to modify and develop further the control concept of EP 1 992 537 A2 for providing improved safety and higher driver's comfort and convenience, and in particular for providing improved vehicle handling and cornering behavior.

Patent document EP 2484572 A1 describes a vehicle motion control system capable of independently controlling a driving force and a braking force of four wheels comprising: a first mode (G-Vectoring control) in which substantially the same driving force and braking force are generated with respect to left and right wheels among the four wheels based on a longitudinal acceleration/deceleration control command that is coordinated with the vehicle's lateral motion; and a second mode (sideslip prevention control) in which different driving forces and braking forces are generated with respect to the left and right wheels among the four wheels based on a target yaw moment derived from the vehicle's sideslip information, wherein the first mode is selected when the target yaw moment is equal to or less than a pre-defined threshold, and the second mode is selected when the target yaw moment is greater than the threshold.

EP 2 492 160 A1 shows a vehicle motion control device that defines a pre-curve entry deceleration amount taking the deceleration amount that occurs while traveling a curve into consideration. A vehicle motion control device comprises: a lateral motion-coordinated acceleration/deceleration calculation means that calculates lateral motion-coordinated acceleration/deceleration, which is the longitudinal acceleration/deceleration of a vehicle that is coordinated with lateral motion, in accordance with lateral jerk that acts on the vehicle at curve entry; and a vehicle speed control device, which calculates pre-curve entry deceleration that is to be generated with respect to the vehicle before entering the curve, taking lateral motion-coordinated acceleration/deceleration calculated by the lateral motion-coordinated acceleration/deceleration calculation device into consideration. Thus, over-deceleration of pre-curve entry deceleration may be prevented, and the connection between pre-curve entry deceleration and lateral motion-coordinated acceleration/deceleration made smooth, thereby mitigating the sense of unnaturalness experienced by the driver.

**Summary of the invention**

In view of the above object, there is proposed a method for performing driving assistance for a vehicle according to claim 1 and an apparatus for performing driving assistance for a vehicle according to claim 13 according to the present invention. Further, a computer program product according to claim 14 is proposed. Dependent claims relate to some of the preferred embodiments of the present invention.

According to a general aspect, there may be provided a method or apparatus for performing driving assistance for a vehicle in which a lateral acceleration and a lateral jerk of the moving vehicle or at least parameters indicative of the lateral acceleration and the lateral jerk of the moving vehicle are determined, in particular regularly determined or even continuously monitored, and a longitudinal acceleration of the moving vehicle may then be controlled on the basis of the determined lateral acceleration and lateral jerk.

According to a first aspect, a method for performing driving assistance for a vehicle moving in the longitudinal direction on a road comprises determining a lateral acceleration of the vehicle, which is an acceleration of the vehicle in a lateral direction perpendicular to a longitudinal direction of the vehicle corresponding to a moving direction of the vehicle, and determining a lateral jerk of the vehicle, which is a jerk of the vehicle in the lateral direction, and controlling a longitudinal acceleration of the vehicle on the basis of the determined lateral acceleration and lateral jerk.

The method for controlling the longitudinal acceleration of the vehicle based on lateral jerk is activated only under circumstances in which the control can be assumed to be required by activating control of the longitudinal acceleration of the vehicle on the basis of the determined lateral acceleration and lateral jerk, when the acceleration target value or the lateral jerk exceeds a threshold value, in particular in case an absolute value of the acceleration target value or an absolute value of the lateral jerk exceeds a positive threshold value. Note that a term "exceeding a threshold value" may also mean that the acceleration target value or the lateral jerk may be negative and decrease or fall below a negative threshold value. The method is characterized by detecting whether a curve of the road is ahead of the vehicle in the longitudinal direction, and by varying the threshold value on the basis of the result of the detecting whether a curve of the road is ahead of the vehicle.

The underlying idea of the above aspect is that the control can conveniently only be activated when necessary so as to increase driver's comfort and safety. Specifically, it may occur that a driver may voluntarily drive in a slightly wobbly manner (i.e. voluntary wobble-steering) in a sort of zig-zag pattern on a straight road, or the road is making slight curves with very large curve radii. Or, the driver may have a personal tendency of changing road lanes quickly.

In any of the above cases, at least small lateral acceleration and lateral jerk of the vehicle will be generated and detected, leading to a possible short deceleration and/or acceleration in the longitudinal moving direction according to the above control of longitudinal acceleration on the basis of lateral jerk, when activated.

That is, when a driver, for some personal reason, voluntarily drives in a slightly wobbly manner (i.e. voluntary wobble-steering) in a sort of zig-zag pattern on a straight road, or the road is making slight curves with very large curve radii, or the driver may have a tendency to change road lanes on a multi-lane road quickly, e.g. for overtaking, the above control of longitudinal acceleration on the basis of lateral jerk may lead to undesirable deceleration/acceleration of the vehicle so that a safety and a driver's comfort is significantly reduced.

According to the underlying concept of the invention, above control may initially be deactivated while the vehicle is travelling on a straight road, and it is then conveniently automatically activated once the lateral jerk (in particular an absolute value thereof) or the calculated longitudinal acceleration target control value (in particular an absolute value thereof) exceeds a threshold value. In some embodiments, the control may also be activated in case the lateral acceleration exceeds a threshold value.

By such aspects as described above, the control of longitudinal acceleration may conveniently and reliably remain deactivated while the vehicle is travelling on a straight road, even when the driver may have a personal tendency of changing road lanes quickly or to steer, for some personal reason, in a wobble-steering manner on the straight road, or even when cornering in curves which have large radii and do not require longitudinal acceleration control.

On the other hand, once a vehicle performs cornering in a curve having a smaller radius or when the driver makes a stronger steering operation on a straight road, e.g., in order to avoid an obstacle on a straight road, a larger lateral jerk will be created and the lateral jerk and/or the longitudinal acceleration target control value will exceed the threshold value, and longitudinal acceleration control on the basis of the lateral jerk will appropriately and reliably be activated, leading to desirable deceleration/acceleration of the vehicle as needed for safety reasons.

Summarizing the above, by making the activation of the control of the longitudinal acceleration based on lateral jerk depend on a threshold value for the lateral jerk and/or longitudinal acceleration control value, over-activation of the control can be advantageously avoided on straight roads or in curves having large radii. Still, an appropriate and reliable activation of the control can be enabled for curves having larger radii and avoiding obstacles on straight roads, since the steering operations of the driver and turning of the vehicle will generate higher lateral jerk so that the lateral jerk and/or the longitudinal acceleration control target value will exceed the threshold value in such situations, and the GVC safety control will be suitably and reliably activated when needed. Consequently, the present invention allows to significantly improve driver's comfort and safety response of the vehicle.

In the above, the term "acceleration" may refer to a derivative of speed (or velocity) with respect to time and the term jerk refers to a derivative of acceleration with respect to time, or to a second derivative of speed (or velocity) with respect to time. A lateral direction of the vehicle can also be referred to as a direction of the pitch axis of the vehicle and a longitudinal direction of the vehicle can be referred to as a direction of the roll axis of the vehicle.

Moreover, while velocity, acceleration and jerk are in general vector quantities, terms such as lateral acceleration, longitudinal acceleration, and lateral jerk are typically referring to scalar quantities.

In a Cartesian coordinate system of the vehicle having the yaw, pitch and roll axes as principal axes of the coordinate system, a lateral acceleration refers to the pitch axis coordinate of the acceleration vector and a longitudinal acceleration refers to the roll axis coordinate of the acceleration vector. Similarly, a lateral jerk refers to the pitch axis coordinate of the jerk vector.

In the driving control, while the longitudinal acceleration may preferably need to discriminate between positive acceleration (acceleration of the vehicle in the sense of increasing speed) and negative acceleration (deceleration) of the vehicle in the sense of decreasing speed and/or braking, the lateral acceleration does not necessarily need to discriminate between positive lateral acceleration (i.e. acceleration towards the left/right) and negative lateral acceleration (i.e. acceleration towards the right/left) since driving control should preferably be performed similar for left turn and right turn driving.

Therefore, a lateral acceleration may similarly refer to the absolute value of the pitch axis coordinate of the acceleration vector, however, then a lateral jerk may preferably refer to the derivative of the absolute value of the lateral acceleration with respect to time. On the other hand, a lateral jerk preferably again may preferably need to discriminate between positive jerk (i.e. increasing lateral acceleration) and negative jerk (i.e. decreasing lateral acceleration.

According to a preferred aspect, the method may further comprise detecting whether a curve of the road is ahead of the vehicle in the longitudinal direction, and varying the threshold value on the basis of the result of the detecting whether a curve of the road is ahead of the vehicle.

This aspect provides the advantage that it can even more reliably be determined when activation of the control based on lateral jerk is required, or is at least recommendable, because the relevant threshold for activation can be varied on the basis of information indicating whether a curve is ahead of the vehicle or not, so that the threshold can be suitably varied between a threshold value that is appropriate for straight roads for avoiding control over-activation when not needed and another threshold value that is appropriate for curves and more sensitive control activation. Here, the threshold value is the preferably lowered when a curve of the road is detected ahead of the vehicle.

It is to be noted that plural methods for detecting, whether a curve is ahead of the vehicle, can be applied for the above aspect, and the invention is not limited to specific methods of detecting a presence of a curve ahead of a vehicle. For example, some of the preferred embodiments for detecting a presence of a curve ahead of the vehicle are described for preferred embodiments below with reference to accompanying drawings.

Among the plural methods, there are various methods possible using visual information e.g. collected by a camera of the vehicle (e.g. by detection of lights of other vehicles travelling ahead on the road, by road marking detection, by road sign detection, etc.) or other sensor means of the vehicle.

Also, alternatively or in addition, it is possible to detect a presence of a curve ahead of the vehicle based on navigational map data and a position and moving direction of the vehicle sensed by a position determining means such as e.g. by satellite navigation or triangulation.

In addition or alternatively, it is possible to detect a presence of a curve ahead of the vehicle in a vehicular communication network in which a stationary road side unit located at the location of the curve or in the vicinity of the curve may transmit curve warning messages to vehicles in its communication range, or another vehicle currently travelling in the curve may detect that it is itself currently travelling in a curve (e.g. detected by means of accelerometers for lateral acceleration or jerk, or by steering wheel sensor output information or by gyro-sensor output information sensitive for a yaw-rate of the vehicle, or by monitoring positioning information), and upon detection, the vehicle may transmit messages to other vehicles indicating the presence of the curve at the respective location thereof.

Combinations of such methods as discussed above may be utilized for higher curve detection reliability and/or accuracy.

According to preferred aspects, the absolute value of the threshold value is preferably lowered from a first threshold value to a smaller second threshold value when a curve of the road is detected ahead of the vehicle. In particular, the absolute value of the threshold value may preferably be lowered according to a stepwise decrease from the first threshold value to the second threshold value when a curve of the road is detected ahead of the vehicle, or in alterative preferred aspects, the threshold value may preferably be lowered according to a continuous decrease (e.g. linearly) from the first threshold value to the second threshold value when a curve of the road is detected ahead of the vehicle.

Here, it is advantageous that a first threshold value, preferably optimized for control response requirements on straight roads, may be predefined and another second threshold value, preferably optimized for control response requirements on curved road portions, may be predefined, so that control of longitudinal acceleration and activation conditions thereof may advantageously be optimized for the different requirements on straight and curved road portions, respectively. Thus, significant improvement of driver's comfort and safety of the control can be provided.

According to a preferred aspect, the method may preferably further comprise determining a distance between the vehicle and an entrance of the curve, when a curve of the road is detected ahead of the vehicle, wherein the threshold value is preferably lowered according to the continuous decrease from the first threshold value to the second threshold value on the basis of a decrease of the determined distance to the entrance of the curve, in particular the threshold value may be lowered continuously with decreasing distance of the vehicle to the entrance of the curve, preferably according to a linear decrease or even decrease as a non-linearly function of the distance of the vehicle, when approaching the curve.

According to a preferred aspect, the method may preferably further comprise determining an estimation of reliability of curve detection, when a curve of the road is detected ahead of the vehicle, wherein the threshold value is preferably lowered according to the continuous decrease from the first threshold value to the second threshold value on the basis of an increase of the determined estimation of reliability of curve detection, in particular the threshold value may be lowered continuously with increasing reliability and/or accuracy of curve detection, preferably according to a linear increase or even as a non-linear function of the reliability and/or accuracy.

According to a preferred aspect, the method may preferably further comprise determining, when a curve of the road is detected ahead of the vehicle, an estimation of a lateral acceleration at a preview point, which is located ahead of the vehicle at a predetermined preview distance or at a preview distance which is calculated on the basis of a predetermined preview time and the current speed of the vehicle, the estimated lateral acceleration at a preview point being calculated on the basis of an estimation of curvature of the road at the preview point and the current speed of the vehicle.

Preferably, the threshold value is then lowered according to the continuous decrease from the first threshold value to the second threshold value on the basis of an increase of the determined estimation of the lateral acceleration at the preview point, in particular the threshold value may be lowered continuously with increasing estimation of the lateral acceleration at the preview point, preferably according to a linear increase or even as a non-linear function of the estimation of the lateral acceleration at the preview point.

The above aspects provide the advantage that the variation of the threshold may be performed more appropriate on the basis of more detailed information on the curve detection, including estimation of the distance to the curve and adaptation to the distance to the curve, estimation of the reliably/accuracy of curve detection and adaptation to the reliably/accuracy of curve detection, and/or estimation of estimation of the lateral acceleration at a preview point and adaptation to the estimated lateral acceleration.

According to a preferred aspect, the method may preferably further comprise deactivating control of a longitudinal acceleration of the vehicle on the basis of the determined lateral acceleration and lateral jerk, when the acceleration target value or the lateral jerk does not exceed the threshold value, in particular, when the acceleration target value or the lateral jerk falls below the threshold value.

This has the advantage that the control of the longitudinal acceleration based on the lateral jerk can conveniently be deactivated again as soon as it is no longer required under the circumstances, e.g. when the vehicle is travelling again in a straight direction on a straight road, e.g., after exiting a curve or after avoiding an obstacle. Accordingly, over-activation on a straight road can be advantageously further avoided.

According to a preferred aspect, the threshold value is preferably lowered to a third threshold value, when control of a longitudinal acceleration of the vehicle on the basis of the determined lateral acceleration and lateral jerk is activated.

This has the advantage that a deactivation sensibility of control can be reduced for avoiding undesirable deactivation by decreasing further the threshold, once it was detected that the control is required by the lateral jerk or longitudinal acceleration control target value exceeding the threshold, e.g. during cornering in a curve.

In particular, in case the control is deactivated, when the acceleration target value or the lateral jerk falls below the threshold value, in order to avoid unintended or undesirable deactivation, it is advantageous to lower the threshold value further as soon as the control of longitudinal acceleration based on lateral jerk is activated. Here, preferably, the third threshold value is equal to or smaller than the second threshold value. This has the advantage the undesirable deactivation in a curve of the control can be advantageously avoided.

In further preferred aspects, the threshold value may again be increased, when control of a longitudinal acceleration of the vehicle on the basis of the determined lateral acceleration and lateral jerk is deactivated, or even more preferably, the threshold value is increased again, when a hold time period expires after control of a longitudinal acceleration of the vehicle on the basis of the determined lateral acceleration and lateral jerk is deactivated.

This has the advantage that the lowered third threshold, which is preferably used for less sensitive deactivation of the control (deactivation only if the lateral jerk or longitudinal control target value fall below a small threshold value) for avoiding undesirable deactivation, is afterwards increased again for providing optimized activation conditions for avoiding over-activation on straight roads or curves with large radii for avoiding undesirable activation.

More preferably, during a pre-defined hold time after the lateral jerk and/or acceleration control target value fall below the threshold and longitudinal acceleration control is deactivated, the lower third threshold for less sensitive deactivation of the control is maintained temporarily according to the pre-defined hold time so as to allow quick and reliable re-activation in case the lateral jerk should increase again shortly after deactivation but needs to be activated for safety reasons as quick as possible.

Then, after the hold time expired, it can be more reliably assumed that the vehicle is returned to a steady-straight traveling e.g. after passing the exit of a curve and returning to a straight road portion, and that avoiding over-activation may be desirable again. Then, the threshold may reliably be increased again to the appropriate values for straight travelling in which over-activation is advantageously avoided.

The third threshold value may then, upon or after deactivation, be increased to any of the first or second threshold value, or to another intermediate threshold value. Preferably, the threshold value is increased, upon or after deactivation, up to the first threshold value in a continuous increase or stepwise increase. In case the threshold value is increased continuously (e.g. linearly) or step-wisely to an intermediate value or the second threshold value (e.g. with or without hold time), it may be thereafter be step-wisely or continuously (e.g. linearly) increased again to the first threshold value.

As mentioned already above, curve detection according to aspects of the invention may be performed according to one or more among plural possible methods for curve detection.

For example, according to preferred aspects, detecting whether a curve of the road is ahead of the vehicle in the longitudinal direction comprises at least one of detecting the curve of the road ahead of the vehicle on the basis of position data indicating the position of the vehicle and map data (e.g. navigation map data) indicating geographical topology of a road network, detecting the curve of the road ahead of the vehicle on the basis of optically detecting a road sign indicating the curve ahead of the road, detecting the curve of the road ahead of the vehicle on the basis of optically tracking road markings ahead of the vehicle, detecting the curve of the road ahead of the vehicle on the basis of receiving curve information data from a transmitting road side unit located in the vicinity of the curve, and/or detecting the curve of the road ahead of the vehicle on the basis of receiving curve information data from another second vehicle located ahead of the vehicle, the second vehicle transmitting the curve information data during or after moving through the curve of the road.

According to a second aspect, there is proposed an apparatus (such as a control unit or control system integrated in or mountable to a vehicle) for performing driving assistance for a vehicle moving in a longitudinal direction on a road according to a method as described in one or more of the above-mentioned aspects.

The apparatus may comprise lateral acceleration determining means for determining a lateral acceleration of the vehicle, which is an acceleration of the vehicle in a lateral direction perpendicular to the longitudinal direction of the vehicle, lateral jerk determining means for determining a lateral jerk of the vehicle, which is a jerk of the vehicle in the lateral direction, and longitudinal acceleration controlling means for controlling of a longitudinal acceleration of the vehicle on the basis of the determined lateral acceleration and lateral jerk based on a longitudinal acceleration target value being calculated on the basis of the lateral jerk.

The apparatus may further comprise, according to a preferred aspect, activation and/or deactivation control means for activating and/or deactivating control of the longitudinal acceleration of the vehicle on the basis of the determined lateral acceleration and lateral jerk, based on a threshold value, in particular by activating the control, when the acceleration target value or the lateral jerk exceeds the threshold value, and/or by deactivating the control, when the acceleration target value or the lateral jerk again falls below the threshold value.

According to preferred aspects, the apparatus may further comprise curve detection means for detecting whether a curve of the road is ahead of the vehicle in the longitudinal direction. Then, preferably, the apparatus further has threshold value varying means for varying the threshold value on the basis of the result of the detecting whether a curve of the road is ahead of the vehicle.

The apparatus may further comprise, according to a preferred aspect, storage means for storing one or more threshold values, such as the above-mentioned first, second and/or third threshold values.

According to a third aspect, there is proposed a computer program product comprising computer program means for causing a vehicle control apparatus to execute the steps of a method according to one or more of the above-described aspects.

**Brief description of figures**

Fig. 1 exemplarily illustrates a control of longitudinal acceleration based on lateral acceleration and jerk.

Fig. 2 exemplarily illustrates a relation between lateral acceleration, lateral jerk and longitudinal acceleration based on lateral acceleration and jerk as a function of time.

Fig. 3 exemplarily shows a g-g-diagram for the lateral and longitudinal accelerations during cornering of the vehicle under control of longitudinal acceleration based on lateral acceleration and jerk.

Fig.4 exemplarily illustrates a control of longitudinal acceleration based on lateral acceleration and jerk according to an embodiment of the present invention.

Fig. 5 exemplarily shows a schematic view of a vehicle equipped with a control system according to an embodiment of the present invention.

Fig. 6 exemplarily illustrates a control method according to an embodiment of the present invention.

Fig. 7 exemplarily illustrates curve detection according to an embodiment of the present invention.

Fig. 8 exemplarily illustrates curvature estimation according to an embodiment of the present invention.

Fig. 9 exemplarily illustrates curve detection according to another embodiment of the present invention.

Fig. 10 exemplarily illustrates examples of curve-indicating road signs.

Fig. 11 exemplarily illustrates curve detection according to another embodiment of the present invention.

Fig. 12 exemplarily illustrates curve detection according to another embodiment of the present invention.

Fig. 13 exemplarily illustrates threshold variation according to an embodiment of the present invention.

Fig. 14 exemplarily illustrates threshold variation according to another embodiment of the present invention.

Fig. 15 exemplarily illustrates threshold variation according to another embodiment of the present invention.

Fig. 16 exemplarily illustrates estimation of lateral acceleration at a preview point according to an embodiment of the present invention.

Fig. 17 exemplarily illustrates threshold variation according to another embodiment of the present invention.

Fig. 18 exemplarily illustrates threshold variation according to another embodiment of the present invention.

Fig. 19 exemplarily illustrates threshold variation according to another embodiment of the present invention.

Fig. 20 exemplarily illustrates an example of vehicle behavior of a vehicle on a road.

Fig. 21 exemplarily illustrates control of longitudinal acceleration of the vehicle of Fig. 20 in an embodiment of the present invention.

Fig. 22 exemplarily illustrates control of longitudinal acceleration of the vehicle of Fig. 20 in another embodiment of the present invention.

**Detailed description of figures and preferred embodiments of the present invention**

Preferred embodiments of the present invention will be described below with reference to the accompanying figures. The described features and aspects of the embodiments may be modified or combined to form further embodiments of the present invention.

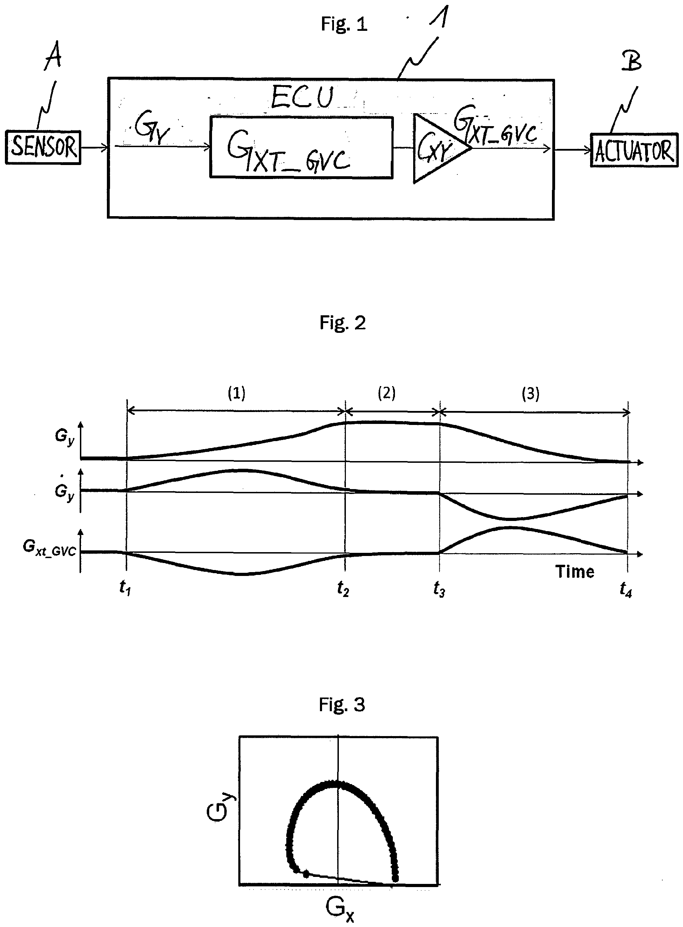

Fig. 1 exemplarily illustrates a control of longitudinal acceleration $G_X$ based on lateral acceleration $G_Y$ and jerk $\dot{G}_Y$.

Based on sensor input by a sensor A or sensor system, which is configured to directly input a regularly or periodically determined or even continuously monitored lateral acceleration $G_Y$ in the pitch axis direction of a vehicle to a control unit 1 or indirectly provide sensor information on the basis of which the lateral acceleration $G_Y$ can be estimated, a longitudinal acceleration control target value $G_{xt\_GVC}$ is determined, and output to one or more actuators B for vehicle acceleration/deceleration according to the longitudinal acceleration control target value $G_{xt\_GVC}$ output from the control unit 1.

The sensor A or sensor system may comprise acceleration sensitive sensors such as e.g. motion sensors, accelerometers and/or yaw-rate, pitch-rate and/or roll-rate sensitive gyro-sensors. In addition, or alternative, the sensor A may comprise a steering wheel (or driving wheel) angular sensor sensitive to a steering wheel angle (or driving wheel angle) and a lateral acceleration may be calculated on the basis of vehicle speed and the determined steering wheel angle (or driving wheel angle), and/or it may be estimated on the basis of pitch, roll and/or yaw rates determined by a gyro-sensor.

Based on the input lateral acceleration $G_Y$, a derivative of the lateral acceleration $G_Y$ with respect to time is derived or calculated, referred to as lateral jerk $\dot{G}_Y$, and based on the lateral acceleration $G_Y$ and the lateral jerk $\dot{G}_Y$, the longitudinal acceleration target control value $G_{xt\_GVC}$ is calculated according to the following equation (1):

$$G_{xt\_GVC} = -sgn\left(G_y \cdot \dot{G}_y\right)\frac{C_{xy}}{1+Ts}\left|\dot{G}_y\right| \qquad (1)$$

Here, $C_{xy}$ and T are auxiliary control parameters that can be pre-defined and stored in a memory unit of the control unit 1. $C_{xy}$ is referred to as a "gain factor" (a dimensionless parameter), and the longitudinal acceleration target control value $G_{xt\_GVC}$ is directly proportional to the gain factor $C_{xy}$ and the absolute value of the lateral jerk $\dot{G}_Y$. The longitudinal acceleration target control value $G_{xt\_GVC}$ increases with increased gain factor $C_{xy}$ and decreases with decreased gain factor $C_{xy}$. Another control parameter may be included such as T which is referred to as a "time constant" or "time factor" (a dimensionless parameter). Here, the longitudinal acceleration target control value $G_{xt\_GVC}$ increases with decreased time factor T and decreases with increased time factor T.

According to equation (1) above, the sign of the longitudinal acceleration target control value $G_{xt\_GVC}$ is opposite to the sign of the product of the lateral acceleration $G_Y$ and the lateral jerk $\dot{G}_Y$.

Here, the lateral acceleration $G_Y$ may discriminate between left and right lateral direction by being negative for left (or right) sided lateral acceleration and correspondingly being positive for right (or left) sided lateral acceleration. On the other hand, lateral acceleration $G_Y$ may also only refer to an absolute value of lateral acceleration, however, then the lateral jerk $\dot{G}_Y$ needs to refer to the derivative of the absolute value of lateral acceleration with respect to time.

Fig. 2 exemplarily illustrates a relation between lateral acceleration $G_Y$, lateral jerk $\dot{G}_Y$ and longitudinal acceleration $G_X$ controlled based on lateral acceleration $G_Y$ and jerk $\dot{G}_Y$ as a function of time, when the longitudinal acceleration $G_X$ is controlled according to the longitudinal acceleration target control value $G_{xt\_GVC}$ as described above.

When a vehicle is entering a curve for cornering and the driver moves the steering wheel so that the vehicle turns about the yaw axis, lateral acceleration $G_Y$ (which is zero on a straight road independent of whether the vehicle is accelerating, decelerating or moving at a constant speed) will start to increase from zero, see period between times

$t_1$ and $t_2$ in Fig. 2.

In an intermediate period between times $t_2$ and $t_3$ in Fig. 2, lateral acceleration will $G_Y$ reach a maximum value and may stay approximately constant until it decreases again down to zero in a last cornering period between times $t_3$ and $t_4$ in Fig. 2 when leaving the curve at the curve exit.

Here, depending on the topology of the curve, the time period between times $t_2$ and $t_3$ may be very short or not even exist. In the later case, the lateral acceleration $G_Y$ may increase from zero to a maximum value and thereafter directly decrease again down to zero when leaving the curve.

As shown in Fig. 2, the lateral jerk $\dot{G}_Y$ will increase to a maximum value during this cornering scenario and decrease again down to zero between times $t_1$ and $t_2$. In the intermediate time period between times $t_2$ and $t_3$, where the lateral acceleration $G_Y$ does not vary significantly, the lateral jerk $\dot{G}_Y$ remains zero, and in the last time period between times $t_3$ and $t_4$, lateral jerk $\dot{G}_Y$ will decrease from zero to a minimum during this cornering scenario value and increase again up to zero.

The longitudinal acceleration target control value $G_{xt\_GVC}$ as described above will behave similarly to the absolute value of the lateral jerk $\dot{G}_Y$ because being directly proportional to the absolute value of the lateral jerk $\dot{G}_Y$ but the sign is the opposite sign of the product of lateral acceleration and jerk.

Consequently, directly after entering the curve and beginning the cornering in the first period between times $t_1$ and $t_2$, the longitudinal acceleration target control value $G_{xt\_GVC}$ will decrease down from zero to a minimum value during this cornering scenario and increase again to zero. In this period, the longitudinal acceleration target control value $G_{xt\_GVC}$ is negative and thus corresponds to a negative acceleration or deceleration (braking) of the vehicle in the first phase of cornering. Accordingly, during the whole period between times $t_1$ and $t_2$, vehicle speed will be decreased (deceleration or braking control).

In the intermediate period between times $t_2$ and $t_3$, the longitudinal acceleration target control value $G_{xt\_GVC}$ will remain approximately zero as long as the lateral jerk $\dot{G}_Y$ remains approximately zero, i.e. the vehicle will move by an approximately constant speed through the curve during the cornering during the period between times $t_2$ and $t_3$.

Finally, in the last stage of cornering before leaving the curve, during the period between times $t_3$ and $t_4$, the longitudinal acceleration target control value $G_{xt\_GVC}$ will increase up from zero to a maximum value during this cornering scenario and decrease again to zero. In this period, the longitudinal acceleration target control value $G_{xt\_GVC}$ is positive and thus corresponds to a positive acceleration of the vehicle in the final phase of cornering. Accordingly, during the whole period between times $t_3$ and $t_4$, vehicle speed will be increased (acceleration control).

Fig. 3 exemplarily shows a g-g-diagram for the lateral and longitudinal accelerations $G_Y$ and $G_X$ during cornering of the vehicle under control of longitudinal acceleration $G_X$ based on lateral acceleration $G_Y$ and jerk $\dot{G}_Y$ according to the longitudinal acceleration target control value $G_{xt\_GVC}$. Here, the horizontal axis denotes the longitudinal acceleration $G_X$ (negative values on the left and positive values on the right), and the vertical axis denotes positive values of the lateral acceleration $G_Y$.

According to the relations as explained with reference to Fig. 2, the g-g-diagram of Fig. 3 will be run through in a clockwise direction starting at the origin where $G_X = G_Y = 0$ before entering the curve prior to cornering. As soon as the vehicle starts cornering, the lateral acceleration $G_Y$ will increase, resulting in a negative longitudinal acceleration $G_X$ until the lateral acceleration $G_Y$ reaches a maximum value, resulting in the longitudinal acceleration $G_X$ being zero, whereafter the lateral acceleration $G_Y$ will decrease again down to zero in the final stage of cornering, resulting in a positive longitudinal acceleration Gx until the lateral acceleration $G_Y$ reaches zero again at the exit of the curve.

Summarizing the above, in the control of the longitudinal acceleration $G_X$ of the vehicle according to the longitudinal acceleration target control value $G_{xt\_GVC}$, when the vehicle starts entering a corner, the vehicle will automatically brake (or decelerate) simultaneously as the lateral jerk $\dot{G}_Y$ increases (see the period between times $t_1$ and $t_2$ in Fig. 2, left side of Fig. 3), and thereafter the vehicle may remain in a steady-state cornering in which no longitudinal acceleration or deceleration is performed (i.e. the vehicle stops braking without accelerating again) in the period between times $t_2$ and $t_3$ in Fig. 2 because the lateral jerk $\dot{G}_Y$ becomes zero. Finally, the vehicle begins to accelerate again in the final stage of cornering when the vehicle begins to return to straight-ahead driving (see the period between times $t_3$ and $t_4$ in Fig. 2, right side of Fig. 3).

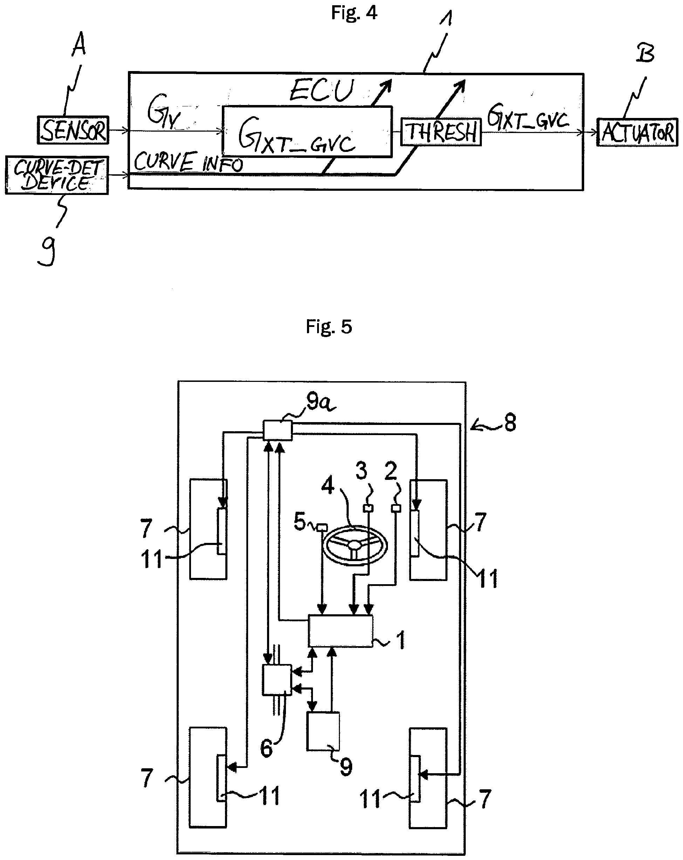

Fig. 4 exemplarily illustrates a control of longitudinal acceleration based on lateral acceleration and jerk according to an embodiment of the present invention. Control of the longitudinal acceleration $G_X$ is performed by the control unit 1 similar to Fig. 1 based on a calculated longitudinal acceleration target control value $G_{xt\_GVC}$, however, with the difference that it is monitored whether the absolute value of the calculated longitudinal acceleration target control value $G_{xt\_GVC}$ (or the absolute value of the lateral jerk) exceeds a threshold value or not.

If the absolute value of the calculated longitudinal acceleration target control value $G_{xt\_GVC}$ (or the absolute value of the lateral jerk) actually exceeds the threshold value, the control is activated and control unit 1 outputs the longitudinal acceleration target control value $G_{xt\_GVC}$ to the actuator B. Otherwise, when the absolute value of the calculated longitudinal acceleration target control value $G_{xt\_GVC}$ (or the absolute value of the lateral jerk) remains below the threshold, the control remains deactivated and control unit 1 does not output the longitudinal acceleration target control value $G_{xt\_GVC}$ to the actuator B or output the longitudinal acceleration target control value which does not activate the actuator B.

Furthermore, once the control is activated and control unit 1 outputs the longitudinal acceleration target control value $G_{xt\_GVC}$ to the actuator B, it is monitored whether the absolute value of the calculated longitudinal acceleration target control value $G_{xt\_GVC}$ (or the absolute value of the lateral jerk) remains above and exceeds the threshold, and, when it is detected by the control unit 1 that the absolute value of the calculated longitudinal acceleration target control value $G_{xt\_GVC}$ (or the absolute value of the lateral jerk) falls below the threshold value, the control is deactivated again and control unit 1 stops outputting the longitudinal acceleration target control value $G_{xt\_GVC}$ to the actuator B or starts outputting the longitudinal acceleration target control value which does not activate the actuator B.

Moreover, according to the embodiment, curve information is provided to the control unit 1 based on the input from a curve-detection unit 9 which is configured to detect a presence of a curve ahead of the vehicle. Especially, the control unit 1 may be configured to automatically and dynamically vary the threshold, used as described above, on the basis of the curve information indicating whether or not a curve is detected ahead of the vehicle or not. In particular, control unit 1 may be configured to lower the threshold when the curve information indicates that a curve has been detected ahead of the vehicle and increase the threshold again when it is detected that the vehicle is travelling on a straight road portion again after leaving the curve, e.g. by determining that the lateral acceleration, the lateral jerk or the longitudinal acceleration target control value becomes small (e.g. falls below the threshold). In particular, threshold variation may be performed according to one of the below described embodiments of threshold variation.

Here, the curve-detection unit 9 may transmit the curve information once when detecting a curve, or it may continuously submit curve information to the control unit 1 (such as sensor input) wherein the control unit 1 may then based on the curve information determine whether a curve is present ahead of the vehicle. It is to be noted that the curve-detection unit 9 can also be integrated in the control unit 1.

Fig. 5 exemplarily shows a schematic view of a vehicle 8 equipped with a control system according to an embodiment of the present invention. The control system exemplarily comprises the control unit 1 and sensors (which may also be integrated into the control unit 1) such as an accelerometer 2, a gyro-sensor 3, a steering wheel angle sensor 5 sensitive to a steering wheel angle STR of the steering wheel 4, and a braking control unit 10 (which may also be integrated into the control unit 1), and a brake actuator 11. Actuators, sensors and control units in the vehicle 8 may be communicably connected via a communication bus line 6.

The vehicle 8 further comprises tires/wheels 7 having the brake actuators 11 being controlled by the braking control unit 10. Exemplarily, the vehicle 8 further comprises a curve-detection unit 9 which may be coupled with a camera device 9 (which may also be comprised in the curve-detection unit 9).

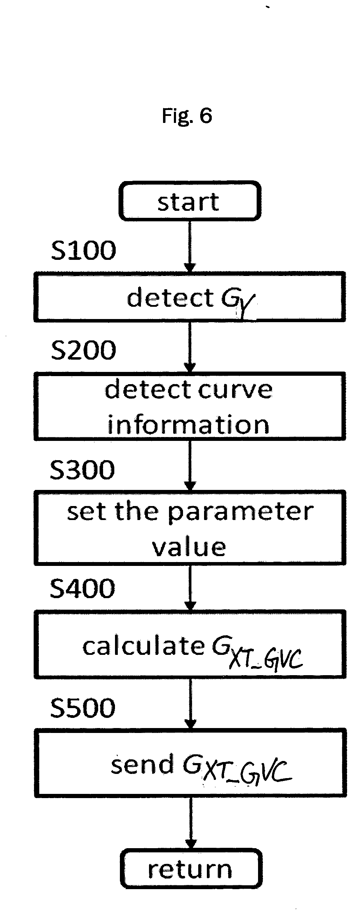

Fig. 6 exemplarily illustrates a control method according to an embodiment of the present invention performed according to the control units 1 of Fig. 4. In a first step S100, control unit 1 directly or indirectly determines the lateral acceleration $G_Y$ based on sensor input. For example, the lateral acceleration $G_Y$ can be determined directly on the basis of sensor input from accelerometer 2.

In addition, or alternatively, lateral acceleration $G_Y$ can be determined indirectly by calculations leading to an estimated lateral acceleration $G_Y$ on the basis of sensor input from the steering wheel angle sensor 5 (or a tire wheel angle sensor) and the vehicle speed of the vehicle 8. Further, in addition or alternatively, the lateral acceleration $G_Y$ can be determined also on the basis of roll, pitch and/or yaw rates detected by gyro-sensor 3.

In a second step S200 (which may be performed before, after or simultaneously with S100), control unit 1 detects curve information received from the curve-detection unit 9 and determines whether a curve is detected ahead of the vehicle 8.

In a third step S300, control parameters are adjusted/selected according to the determined curve information. As discussed above, this may involve at least adjusting the threshold value. Appropriate threshold values may be pre-determined and stored in a memory unit of the control unit 1 including at least two threshold values, one for a case in which a curve is detected ahead of the vehicle 8 and one for a case in which no curve is detected ahead of the vehicle.

After adjustment or selection of the threshold value, the longitudinal acceleration target control value $G_{xt\_GVC}$ is calculated (step S400) and input to an appropriate actuator such as brake actuator 11 for deceleration or by appropriately controlling a driving actuator for positive acceleration (e.g. by controlling a combustion engine of a vehicle or a motor of an electrically driven vehicle) in step S500, e.g. similar as discussed with reference to Figs. 1 and 2 above.

However, the longitudinal acceleration target control value $G_{xt\_GVC}$ is only output in step S500 in case the absolute value of the longitudinal acceleration target control value $G_{xt\_GVC}$ (or the absolute value of the lateral jerk) exceeds the threshold value. Specifically, if the absolute value of the of the longitudinal acceleration target control value $G_{xt\_GVC}$ (or the absolute value of the lateral jerk) exceeds the threshold value, the control is activated, and when the absolute value of the of the longitudinal acceleration target control value $G_{xt\_GVC}$ (or the absolute value of the lateral jerk) does not exceed the threshold value or falls below the threshold value again, control is omitted and the longitudinal acceleration target control value $G_{xt\_GVC}$ is not output in step S500, or output the control value which does not activate an appropriate actuator such as brake actuator 11 for deceleration or by appropriately controlling a driving actuator for positive acceleration (e.g. by controlling a combustion engine of a vehicle or a motor of an electrically driven vehicle).

Before describing in more detail possible embodiments for threshold variation in the control of the longitudinal acceleration based on lateral jerk (e.g. performed in step S300 above) in the later specification farther below, plural different examples for curve detection of embodiments of the present invention shall be described in the following.

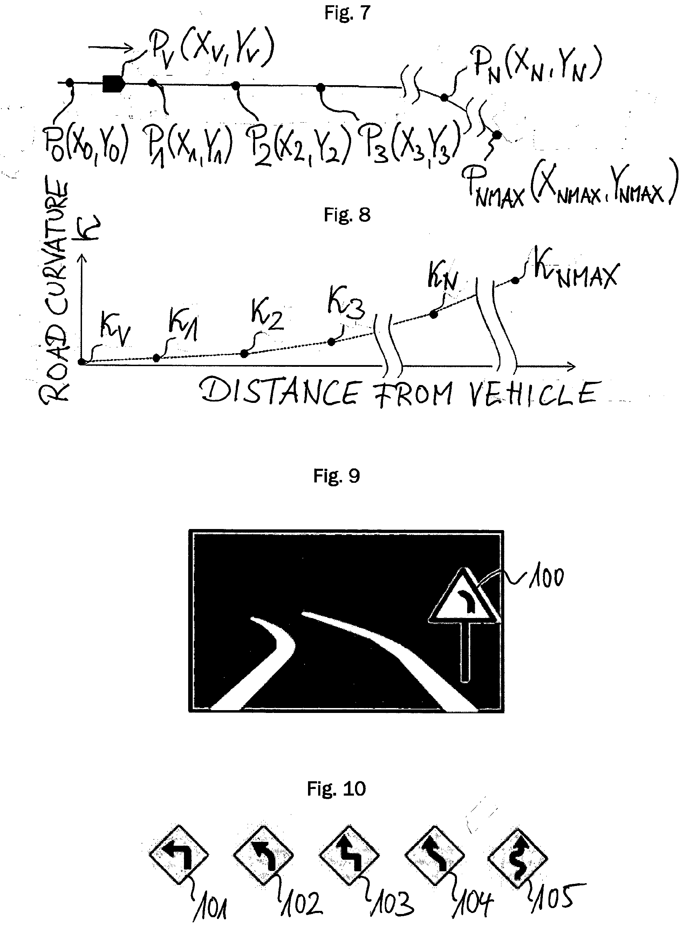

Fig. 7 exemplarily illustrates curve detection according to an embodiment of the present invention. Here, it is assumed that navigation map data as, for example, used for navigation devices, is provided, and the navigation map data indicates road information indicating position of a road ahead of the vehicle, e.g. by data indicating roads positions $P_0$ to $P_{nmax}$ based on coordinates $X_0$ and $Y_0$ to $X_{nmax}$ and $Y_{nmax}$. Based on position information on a position $P_V$ of the vehicle at coordinates $X_V$ and $Y_V$, it is possible to determine a position of the vehicle on the road. For example, the position of the vehicle may be determined by means of satellite navigation such as by GPS or GALILEO.

Fig. 8 exemplarily illustrates curvature estimation according to an embodiment of the present invention. On the basis of the navigation map data indicating road positions $P_1$ to $P_{nmax}$ ahead of the vehicle at location $P_V$, it is possible to determine a road curvature $\kappa$ of a road portion ahead of the vehicle as a function of distance to the vehicle. Accordingly, by means of navigation map data and position data of the vehicle, it can be determined whether a curve is to be expected ahead of the vehicle. For example, curvature information as shown in Fig. 8 can be used as curve information described above.

The threshold value used in the control of the longitudinal acceleration based on jerk may be varied based on the road curvature ahead of the vehicle. For example, the threshold value can be continuously lowered with increasing road curvature of the road at the position of the vehicle or at a road position which is a pre-defined distance ahead of the vehicle, or the threshold value can be lowered step-wisely once it is detected that a road curvature of the road at the position of the vehicle or at a road position which is a pre-defined distance ahead of the vehicle exceeds a curvature threshold.

Fig. 9 exemplarily illustrates curve detection according to another embodiment of the present invention. An optical sensor device, such as e.g. a CCD camera or other camera device, may be mounted to the vehicle, and a presence of a curve ahead of the vehicle may be detected by optically detecting a curve warning sign 100 as shown in Fig. 9. Fig. 10 exemplarily illustrates other examples of curve-indicating road signs 101 to 105. To detect a curve warning sign, navigation devices and navigation map data which has a position of a curve warning sign is also available to detect a curve warning sign on the road the vehicle will pass.

Once, one of the signs can be optically detected by an optical sensor device of the vehicle, the corresponding information can be output to the control unit 1 as curve information, and the threshold value can be lowered step-wisely when it is detected that a curve is expected ahead of the vehicle by optical detection of a curve warning sign at the side of the road as shown in Figs. 9 and 10. The detection may comprise, upon optical detection of a road sign, a pattern-matching process for determining whether the sign indicates a presence of a curve or not. Also, by means of pattern-matching or a character-recognition method, it may be possible to determine a distance to the curve, if the road sign includes distance information indicating a distance to the curve.

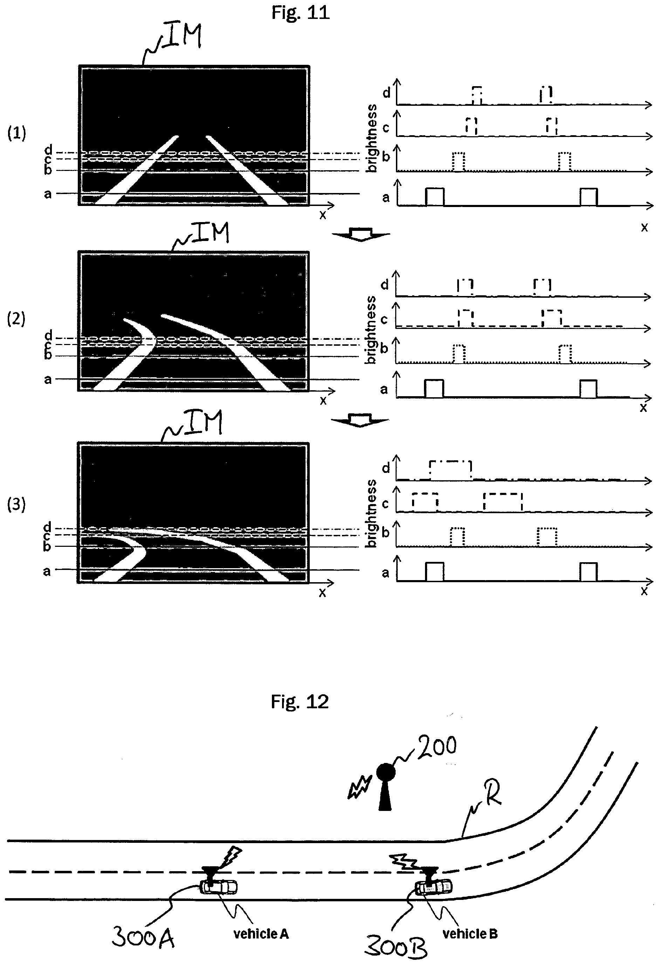

Fig. 11 exemplarily illustrates curve detection according to another embodiment of the present invention. In Fig. 11 it is assumed that an optical sensor device such as a CCD camera or other camera device is mounted to the vehicle and continuously or regularly observes road markings ahead of the vehicle. For example, brightness information of the road may be optically collected horizontally at different heights of a collected image IM such as along lines a, b, c, and d in the image in Fig. 11. Here, line a represents a portion of the road that is closely ahead of the vehicle and lines b, c, and d represent respective portions of the road that are farther ahead of the vehicle. At positions of road markings, brightness is increased and so along each of the lines a to d, positions of road markings can be determined as exemplarily illustrated on the right side of Fig. 11.

If the vehicle is travelling on a straight road and no curve is ahead of the vehicle as shown in the upper left drawing of Fig. 11, the positions of road markings at the farther distances ahead of the vehicle (e.g. at lines c and d) will be closer together compared to road markings at the closer distances ahead of the vehicle (e.g. at lines a and b). However, in case of a straight road, the intermediate positions between right and left road markings will be approximately at the same position for all heights corresponding to lines a to d.

In case of a curve being present ahead of the vehicle, the road markings of the road farther ahead of the vehicle will shift sideways corresponding to the curvature of the curve before road markings of the road closer ahead will shift sideways. This can be seen in the middle and lower images in Fig. 11. Accordingly, in case the vehicle approaches a curve, brightness peaks for lines c and d will start shifting sideways and the curve ahead of the vehicle can be detected by optically observing positions of road markings at different distances from the vehicle. If a curve is detected ahead of the vehicle, corresponding curve information can be transmitted to the control unit 1 and the threshold used in the control of the longitudinal acceleration based on lateral jerk can be lowered, e.g. step-wisely.

In the above embodiment of curve detection, it is further possible to determine an accuracy of curve detection. For example, if there is almost no shift of the high-brightness position on line d, the accuracy of the curve-detection is set to zero. If the high-brightness position on line d representing the farthest distance ahead shifts even though the data on the other lines remain almost same such as in the middle image in Fig. 11, the accuracy of the curve-detection is set to a low value. This accuracy of the curve-detection can be increased as the amount of the shift on line d and the other lines like line c increase correspondingly such as e.g. in the lower image in Fig. 11. If a curve is detected ahead of the vehicle, corresponding curve information can be transmitted to the control unit 1 and the threshold used in the control of the longitudinal acceleration based on lateral jerk can be lowered continuously as the determined accuracy of curve detection increases.

Fig. 12 exemplarily illustrates curve detection according to another embodiment of the present invention. In Fig. 12, the road R has a curve and in the vicinity of the curve, a stationary road side unit 200 is wirelessly transmitting curve information and/or curve warning information. The transmitted message may indicate the presence of the curve and may additionally include curve information such as data indicating a position of the curve and/or further curve information such as a curvature of the curve.

On the road R, a vehicle 300A and a vehicle 300B are travelling on the road R and, once the vehicles 300A and 300B are located in the communication range of the road side unit 200, they can detect the presence of the curve by receiving the message from the road side unit 200. Once, a message including curve information is received from a road side unit 200 at the vehicles 300A and 300B, respectively, the respective control units 1 mounted to the vehicles can lower the threshold used in the control of the longitudinal acceleration based on the lateral jerk. Such curve detection can be realized in vehicular networks such as VANETs etc.

In addition, in vehicular networks such as e.g. VANETs, curve detection may also be performed by a vehicle itself (such as e.g. vehicle 300B in Fig. 12) by any of the above-described methods or even by detecting change in a steering wheel angle, a yaw-rate detected by a gyro-sensor or lateral acceleration by an accelerometer, and, once a curve is detected by vehicle 300B, vehicle 300B can transmit a message including curve information to neighboring nodes of the vehicular network such as e.g. to vehicle 300A. Accordingly, on vehicle 300B, the presence of the curve may also be detected based on curve information received from vehicle 300B. Upon receiving curve information form vehicle 300B, the control unit 1 mounted to vehicle 300A can lower the threshold used in the control of the longitudinal acceleration based on lateral jerk.

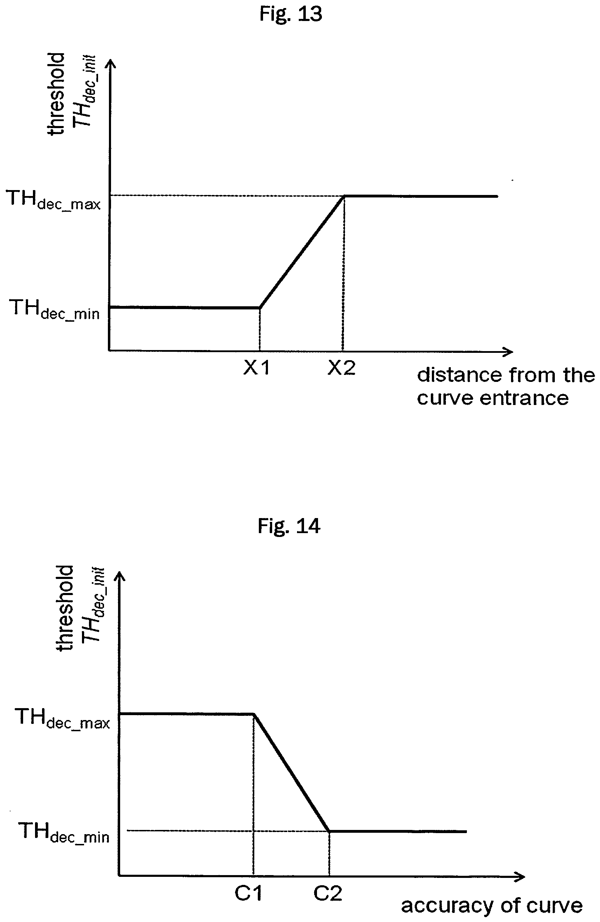

Fig. 13 exemplarily illustrates threshold variation according to an embodiment of the present invention. In Fig. 13, the threshold used in the control of the longitudinal acceleration based on lateral jerk is varied between a larger threshold value $TH_{dec\_max}$ and a lower threshold value $TH_{dec\_min}$. In Fig. 13, when no curve is detected ahead of the vehicle, for avoiding over-activation on straight roads or curves with very high radii, the control will be only activated when the lateral jerk or the calculated longitudinal acceleration target control value exceeds the threshold value set as the a larger threshold value $TH_{dec\_max}$.

Once a curve is detected by any of the above-methods, a distance to the curve may be estimated, and the threshold value used by control unit 1 for activation of the control of the longitudinal acceleration based on lateral jerk may be lowered continuously with decreasing distance of the vehicle to the curve. For example, as illustrated in Fig. 13, the threshold value can be lowered linearly from the larger threshold value $TH_{dec\_max}$ to the lower threshold value $TH_{dec\_min}$ between distances X2 and X1 (with X1<X2). After the distance between the vehicle and the entrance of the curve falls below distance X1, the threshold value remains to be set at the lower threshold value $TH_{dec\_min}$.

Fig. 14 exemplarily illustrates threshold variation according to another embodiment of the present invention. In Fig. 14, the threshold used in the control of the longitudinal acceleration based on lateral jerk is varied between the larger threshold value $TH_{dec\_max}$ and the lower threshold value $TH_{dec\_min}$. In Fig. 14, when no curve is detected ahead of the vehicle, for avoiding over-activation on straight roads or curves with very high radii, the control will be only activated when the lateral jerk or the calculated longitudinal acceleration target control value exceeds the threshold value set as the a larger threshold value $TH_{dec\_max}$.

Once a curve is detected by any of the above-methods, an accuracy of curve detection may be estimated, and the threshold value used by control unit 1 for activation of the control of the longitudinal acceleration based on lateral jerk may be lowered continuously with increasing accuracy of curve detection. For example, as illustrated in Fig. 14, the threshold value can be lowered linearly from the larger threshold value $TH_{dec\_max}$ to the lower threshold value $TH_{dec\_min}$ between estimated accuracies C1 and C2 (with C1<C2). After the accuracy of curve detection exceeds accuracy C2, the threshold value remains to be set at the lower threshold value $TH_{dec\_min}$.

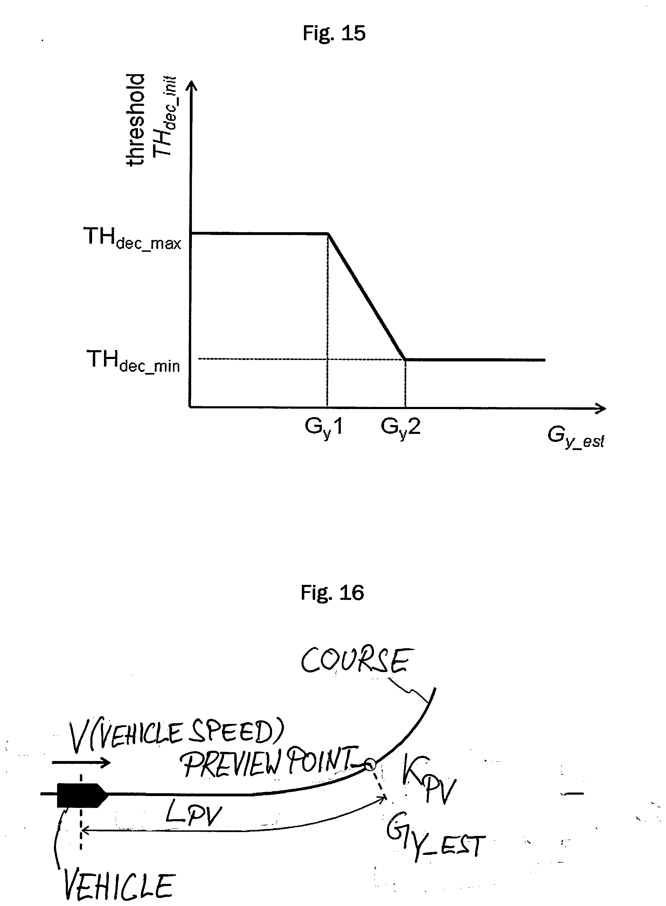

Fig. 15 exemplarily illustrates threshold variation according to another embodiment of the present invention.. In Fig. 15, the threshold used in the control of the longitudinal acceleration based on lateral jerk is varied between the larger threshold value $TH_{dec\_max}$ and the lower threshold value $TH_{dec\_min}$. In Fig. 15, when no curve is detected ahead of the vehicle, for avoiding over-activation on straight roads or curves with very high radii, the control will be only activated when the lateral jerk or the calculated longitudinal acceleration target control value exceeds the threshold value set as the a larger threshold value $TH_{dec\_max}$.

Once a curve is detected by any of the above-methods, an estimate value $G_{y\_est}$ of lateral acceleration at a preview point of the road ahead of the vehicle may be estimated, e.g. according to Fig. 16. Fig. 16 exemplarily illustrates estimation of lateral acceleration at a preview point according to an embodiment of the present invention.

The preview point is ahead of the vehicle at a specific preview distance $L_{pv}$ and a curvature $\kappa_{pv}$ of the road at the preview point is estimated, and the estimate value $G_{y\_est}$ of lateral acceleration at the preview point can be calculated on the basis of the estimated curvature $\kappa_{pv}$ at the preview point and the current vehicle speed V by

$$G_{y\_est} = \kappa_{pv} \times V^2. \qquad (2)$$

For example, the road curvature $\kappa_{pv}$ at the preview point may be estimated such as described above with respect to Figs. 7 and 8. The position of the preview point may be determined on the basis of a pre-defined preview distance $L_{pv}$ or a preview time $t_{pv}$ may be defined, wherein the preview distance $L_{pv}$ can be calculated as

$$L_{pv} = V \times t_{pv}. \qquad (3)$$

This has the advantage that the preview distance will be larger for larger vehicle speeds V so that the preview point will be farther ahead of the vehicle for faster travelling vehicles.

As shown in Fig. 15, the threshold value used by control unit 1 for activation of the control of the longitudinal acceleration based on lateral jerk may be lowered continuously with increasing estimate value $G_{y\_est}$ of lateral acceleration at the preview point. For example, as illustrated in Fig. 15, the threshold value can be lowered linearly from the larger threshold value $TH_{dec\_max}$ to the lower threshold value $TH_{dec\_min}$ between estimated acceleration values $G_y1$ and $G_y2$ for $G_{y\_est}$ (with $G_y1 < G_y2$). After the estimated acceleration value $G_{y\_est}$ exceeds $G_y2$, the threshold value remains to be set at the lower threshold value $TH_{dec\_min}$.

In all of the above embodiments of Figs. 13 to 15, the threshold values are lowered linearly from the larger threshold value $TH_{dec\_max}$ to the lower threshold value $TH_{dec\_min}$. In other embodiments of the present invention, the threshold values may be lowered continuously but non-linearly or the threshold value may be lowered step-wisely, e.g. as soon as the distance between the vehicle and the entrance of the curve falls below distance X1, the accuracy of curve detection exceeds accuracy C2 and/or the estimated acceleration value $G_{y\_est}$ exceeds $G_y2$.

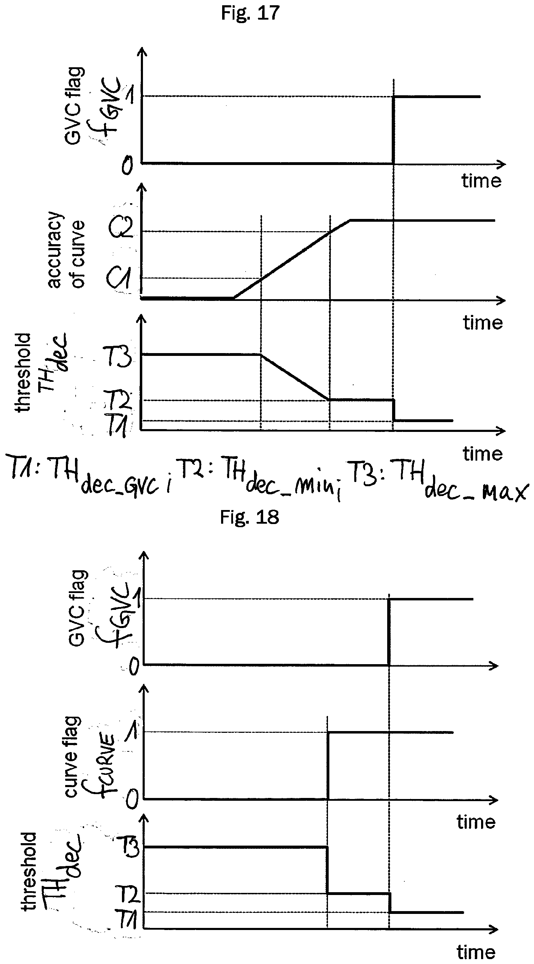

Fig. 17 exemplarily illustrates threshold variation according to another embodiment of the present invention. Exemplarily, the threshold is lowered linearly on the basis of accuracy of curve detection as shown in Fig. 14 but Figs. 13 and 16 could be applied as well. Once a curve is detected, accuracy of curve detection increases continuously. When the accuracy remains below accuracy value C1, the threshold remains to be set as the larger threshold value $TH_{dec\_max}$ and as soon as the accuracy of curve detection exceeds C1, the threshold is lowered linearly to the lower threshold value $TH_{dec\_min}$ and, after the accuracy of curve detection exceeds accuracy C2, the threshold value remains to be set at the lower threshold value $TH_{dec\_min}$.

Once a lateral jerk $\dot{G}_Y$ or the longitudinal acceleration target control value $G_{xt\_GVC}$ exceeds the threshold value (i.e. the lower threshold value $TH_{dec\_min}$), a GVC flag $f_{GVC}$ will be switched on (from zero to 1) as shown in the upper diagram of Fig. 17, and the control is activated by outputting the longitudinal acceleration target control value $G_{xt\_GVC}$ to actuators. According to this exemplary preferred embodiment, the threshold value is further decreased from the lower threshold value $TH_{dec\_min}$ to the activated control threshold $TH_{dec\_GVC}$ which is used by the control unit 1 for deactivation of the control. Specifically, the control is deactivated (i.e. outputting of the longitudinal acceleration target control value $G_{xt\_GVC}$ is stopped), when the lateral jerk $\dot{G}_Y$ or the longitudinal acceleration target control value $G_{xt\_GVC}$ do no longer exceed the threshold value $TH_{dec\_GVC}$.

Fig. 18 exemplarily illustrates threshold variation according to another embodiment of the present invention. Exemplarily, the threshold is lowered step-wisely on the basis of curve detection. Once a curve is detected, a curve flag $f_{curve}$ is switched on (i.e. from 0 to 1). When the curve flag $f_{curve}$ is zero, indicating that no curve is detected, the threshold remains to be set as the larger threshold value $TH_{dec\_max}$ and as soon as the curve flag $f_{curve}$ is activated, the threshold is lowered step-wisely to the lower threshold value $TH_{dec\_min}$ and remains to be set at the lower threshold value $TH_{dec\_min}$.

Once a lateral jerk $\dot{G}_Y$ or the longitudinal acceleration target control value $G_{xt\_GVC}$ exceeds the threshold value (i.e. the lower threshold value $TH_{dec\_min}$), a GVC flag will be switched on (from zero to 1) as shown in the upper diagram of Fig. 18, and the control is activated by outputting the longitudinal acceleration target control value $G_{xt\_GVC}$ to actuators. According to this exemplary preferred embodiment, the threshold value is further decreased from the lower threshold value $TH_{dec\_min}$ to the activated control threshold $TH_{dec\_GVC}$ which is used by the control unit 1 for deactivation of the control. Specifically, the control is deactivated (i.e. outputting of the longitudinal acceleration target control value $G_{xt\_GVC}$ is stopped), when the lateral jerk $\dot{G}_Y$ or the longitudinal acceleration target control value $G_{xt\_GVC}$ do no longer exceed the threshold value $TH_{dec\_GVC}$.

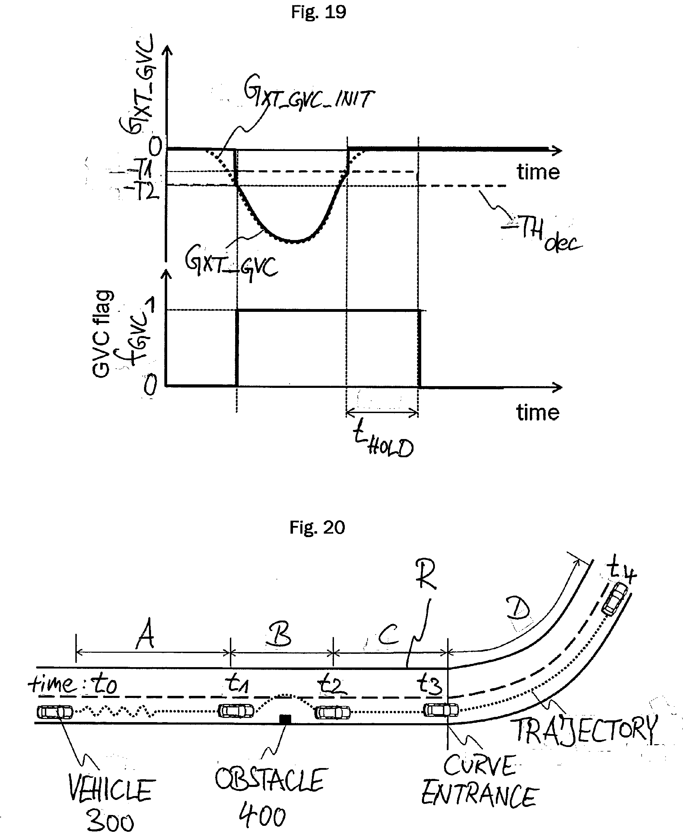

Fig. 19 exemplarily illustrates threshold variation according to another embodiment of the present invention. The lower diagram shows a time period in which the GVC flag is switched on (i.e. from zero to 1). In the upper diagram, the solid line indicates the output control target value $G_{xt\_GVC}$ (when the solid line is zero, either the control target value

$G_{xt\_GVC}$ is not output to actuators, or it is output as zero, both cases leading to deactivated longitudinal acceleration control). The dotted line indicates a calculated value of the control target value $G_{xt\_GVC\_init}$ according to equation (1) above based on an absolute value of lateral jerk. A curve has been previously detected ahead of the vehicle, and the threshold value had been already set to the lower threshold value $TH_{dec\_min}$, e.g. according to Fig. 17 or 18.

Once the calculated control target value $G_{xt\_GVC\_init}$ exceeds the lower threshold value $TH_{dec\_min}$ (in the present example, the negative ted control target value $G_{xt\_GVC\_init}$ falls below the negative value of the lower threshold value $TH_{dec\_min}$, or in other words, the absolute value of the calculated control target value $G_{xt\_GVC\_init}$ exceeds the positive lower threshold value $TH_{dec\_min}$), the GVC flag is activated and the control is activated in that the output target control value $G_{xt\_GVC}$ is output corresponding to the calculated control target value $G_{xt\_GVC\_init}$. In addition, once the calculated control target value $G_{xt\_GVC\_init}$ exceeds the lower threshold value $TH_{dec\_min}$, the threshold is lowered further to the activated control threshold $TH_{dec\_GVC}$.

Further, when the calculated control target value $G_{xt\_GVC\_init}$ does not exceed anymore the threshold (i.e. the then set activated control threshold $TH_{dec\_GVC}$), the control is deactivated and no control target value $G_{xt\_GVC}$ is output or the control target value $G_{xt\_GVC}$ is output as zero. Still, for safety reasons, in order to allow quick re-activation if needed, the threshold value remains to be set at the low activated control threshold $TH_{dec\_GVC}$ for a pre-defined hold time $t_{hold}$ If the calculated control target value $G_{xt\_GVC\_init}$ does not exceed the activated control threshold $TH_{dec\_GVC}$ until expiration of the hold time $t_{hold}$, the threshold is increased again up to the lower threshold value $TH_{dec\_min}$ (or directly to the larger threshold value $TH_{dec\_max}$ in other embodiments). On the other hand, if the calculated control target value $G_{xt\_GVC\_init}$ would exceed the activated control threshold $TH_{dec\_GVC}$ before expiration of the hold time $t_{hold}$, the control could be quickly activated again and the calculated control target value $G_{xt\_GVC\_init}$ could be output to actuators as control target value $TH_{dec\_GVC}$.

Fig. 20 exemplarily illustrates an example of vehicle behavior of a vehicle 300 on a road R indicated by the dotted trajectory of the vehicle. In a first road portion A, the vehicle 300 travels on a straight road and the driver voluntarily drives a zig-zag pattern by wobble-steering between times to and $t_1$. ON a second road portion B, the vehicle 300 travels on the straight road but the driver makes a strong steering operation in order to avoid hitting the obstacle 400 between times $t_1$ and $t_2$. In a third road portion C, the vehicle 300 travels on a straight road in a straight manner between times $t_2$ and $t_3$. Finally, in a last road portion D, the vehicle 300 travels in a curve of the road between times $t_3$ and $t_4$. The vehicle 300 passes the entrance of the curve at time $t_3$.

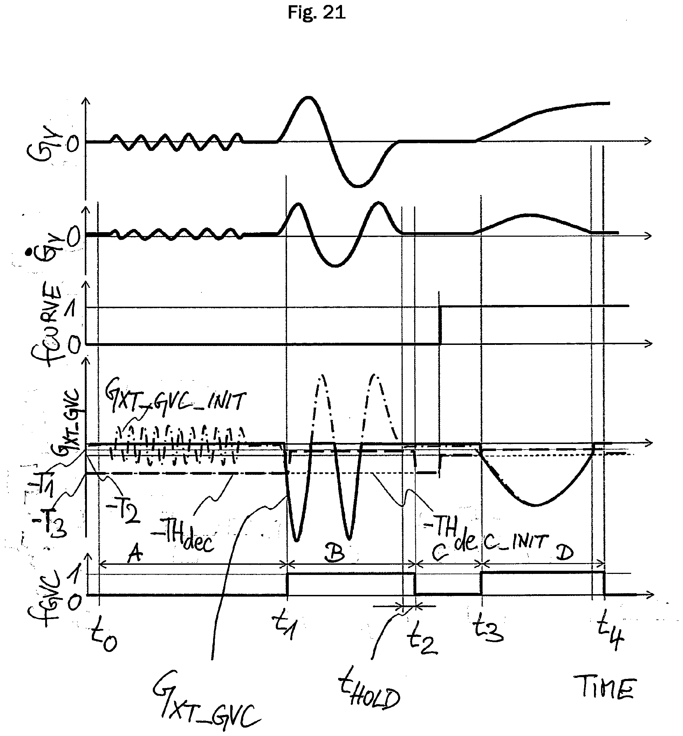

Fig. 21 exemplarily illustrates control of longitudinal acceleration of the vehicle 300 of Fig. 20 in an embodiment of the present invention. The upper diagram shows the lateral acceleration $G_Y$ of the vehicle 300 as a function of time. The thereto lower diagram shows the lateral jerk Gvof the vehicle 300 as a function of time. The thereto lower diagram shows a curve flag $f_{curve}$ according to curve information input to the control unit 1 (e.g. based on curve-detection according to one or more of the above described embodiments). The lowest diagram shows a flag of the control (GVC flag) $f_{GVC}$ which is switched on as described with reference to Fig. 19, when the calculated control target value $G_{xt\_GVC\_init}$ exceeds the currently set threshold value.

The second-lowest diagram shows the calculated control target value $G_{xt\_GVC\_init}$ (dashed-dotted line), the output control target value $G_{xt\_GVC}$ (solid line) and the currently set threshold value (dashed line) as functions of time.

Between times to and $t_1$, when the vehicle 300 is travelling on road portion A, although a lateral jerk is created by the wobble-steered driving, the calculated control target value $G_{xt\_GVC\_init}$ (dashed-dotted line) oscillates between positive and negative values (which would lead to oscillating acceleration and deceleration of the vehicle, if control were activated) but the absolute value of the calculated control target value $G_{xt\_GVC\_init}$ does not exceed the relatively high set threshold value $TH_{dec\_max}$, and, consequently, the control remains deactivated and the calculated control target value $G_{xt\_GVC\_init}$ is not output. Accordingly, over-activation on a straight line can be successfully avoided, even if the driver performs wobble-steering.

However, between times $t_1$ and $t_2$, when the vehicle 300 is travelling on road portion B and avoids the obstacle 400, a larger lateral jerk is created by the obstacle avoiding maneuver of the vehicle 400, and the calculated control target value $G_{xt\_GVC\_init}$ (dashed-dotted line) actually exceed the relatively high set threshold value $TH_{dec\_max}$, and, consequently, the control is activated and the calculated control target value $G_{xt\_GVC\_init}$ is output.

At the same time, when the calculated control target value $G_{xt\_GVC\_init}$ (dashed-dotted line) exceeds the relatively high set threshold value $TH_{dec\_max}$, the threshold is lowered to the activated control threshold $TH_{dec\_GVC}$. Once the absolute value of the calculated control target value $G_{xt\_GVC\_init}$ (dashed-dotted line) falls below the activated control threshold $TH_{dec\_GVC}$, the calculated control target value $G_{xt\_GVC\_init}$ is not output anymore but the activated control threshold $TH_{dec\_GVC}$ remains the set threshold for the hold time $t_{hold}$, and is then increased again up to the larger threshold value $TH_{dec\_max}$.

Then, between times $t_2$ and $t_3$, when the vehicle 300 is travelling on road portion C, the curve ahead of the vehicle is detected and the curve flag $f_{curve}$ is activated. With the activation of the curve flag $f_{curve}$, the threshold value is step-wisely lowered from the larger threshold value $TH_{dec\_max}$ to the lower threshold value $TH_{dec\_min}$. Now, when the vehicle 400 starts cornering the detected curve in road portion D at approximately time $t_3$, an absolute value of lateral jerk is increased and the calculated control target value $G_{xt\_GVC\_init}$ (dashed-dotted line) exceeds the set lower threshold value $TH_{dec\_min}$ and, consequently, the control is activated and the calculated control target value $G_{xt\_GVC\_init}$ is output. Due to the lower threshold $TH_{dec\_min}$ after curve detection, the control of longitudinal acceleration based on lateral jerk can advantageously be immediately activated when the driver starts steering into the curve.

At the same time, when the calculated control target value $G_{xt\_GVC\_init}$ (dashed-dotted line) exceeds the set threshold value $TH_{dec\_min}$, the threshold is lowered to the activated control threshold $TH_{dec\_GVC}$. Once the absolute value of the calculated control target value $G_{xt\_GVC\_init}$ (dashed-dotted line) falls below the activated control threshold $TH_{dec\_GVC}$, the calculated control target value $G_{xt\_GVC\_init}$ is not output anymore but the activated control threshold $TH_{dec\_GVC}$ remains the set threshold for the hold time $t_{hold}$, and is then increased again up to the lower threshold value $TH_{dec\_min}$ (since the curve flag $f_{curve}$ is still activated) or alternatively to the larger threshold value $TH_{dec\_max}$.

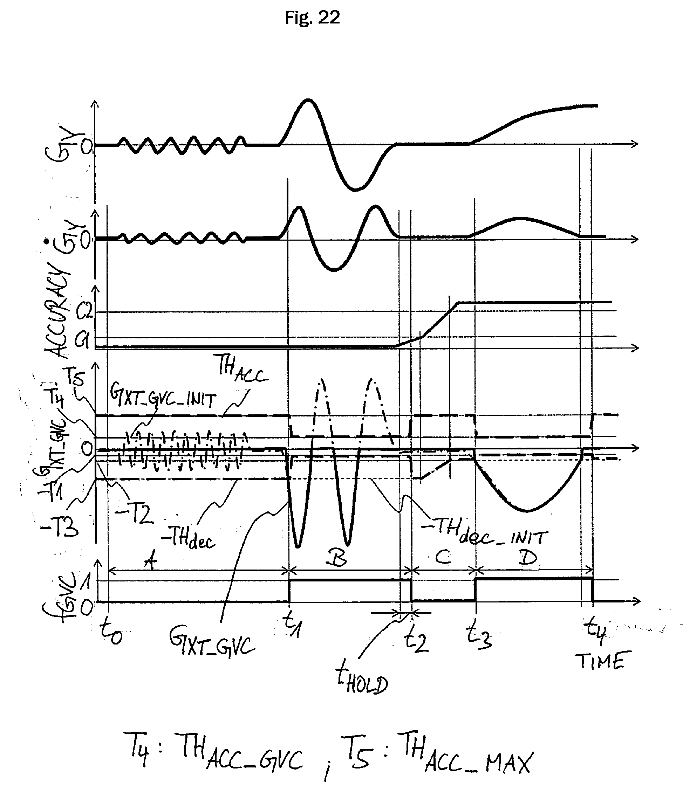

Fig. 22 exemplarily illustrates control of longitudinal acceleration of the vehicle of Fig. 20 in another embodiment of the present invention. Fig. 22 is similar to Fig. 21 with the difference that instead of a curve flag $f_{curve}$ indicating merely if a curve is detected or not, an accuracy of curve detection is used for threshold variations similar to Figs. 14 and 17 above. Accordingly, between times $t_2$ and $t_3$ when the vehicle 300 is enabled to detect the curve ahead, an estimated accuracy of the curve detection increases continuously, and the threshold is lowered continuously from the larger threshold value $TH_{dec\_max}$ to the lower threshold value $TH_{dec\_min}$ when the accuracy of curve detection increased from C1 to C2 (see also Figs. 14 and 17 above).

## Claims

1. Method for performing driving assistance for a vehicle moving in a longitudinal direction on a road, comprising:

    - determining a lateral acceleration ($G_Y$) of the vehicle, which is an acceleration of the vehicle in a lateral direction perpendicular to the longitudinal direction of the vehicle,
    - determining a lateral jerk ($\dot{G}_Y$) of the vehicle, which is a jerk of the vehicle in the lateral direction, and
    - controlling of a longitudinal acceleration ($G_X$) of the vehicle on the basis of the determined lateral acceleration ($G_Y$) and lateral jerk ($\dot{G}_Y$) based on a longitudinal acceleration target value ($G_{XT\_GVC}$) being calculated on the basis of the lateral jerk ($\dot{G}_Y$),
    - activating control of the longitudinal acceleration ($G_X$) of the vehicle on the basis of the determined lateral acceleration ($G_Y$) and lateral jerk ($\dot{G}_Y$), when the acceleration target value ($G_{XT\_GVC}$) or the lateral jerk ($\dot{G}_Y$) exceeds a threshold value (TH).
    **characterized by** detecting whether a curve of the road is ahead of the vehicle in the longitudinal direction, and
    - varying the threshold value (TH) on the basis of the result of the detecting whether a curve of the road is ahead of the vehicle.

2. Method according to claim 1, **characterized in that**
    the threshold value (TH) is lowered when a curve of the road is detected ahead of the vehicle.

3. Method according to claim 1 or 2, **characterized in that**
    the absolute value of the threshold value (TH) is lowered from a first threshold value ($TH_{dec\_max}$) to a smaller second threshold value ($TH_{dec\_min}$) when a curve of the road is detected ahead of the vehicle.

4. Method according to claim 3, **characterized in that**
    the absolute value of the threshold value (TH) is lowered according to a stepwise decrease from the first threshold value ($TH_{dec\_max}$) to the second threshold value ($TH_{dec\_min}$) when a curve of the road is detected ahead of the vehicle; or
    the threshold value (TH) is lowered according to a continuous decrease from the first threshold value ($TH_{dec\_max}$) to the second threshold value ($TH_{dec\_min}$) when a curve of the road is detected ahead of the vehicle.

5. Method according to claim 4, **characterized by** further comprising:

    - determining, when a curve of the road is detected ahead of the vehicle, a distance between the vehicle and an entrance of the curve,
    wherein the threshold value (TH) is lowered according to the continuous decrease from the first threshold value ($TH_{dec\_max}$) to the second threshold value ($TH_{dec\_min}$) on the basis of a decrease of the determined distance to the entrance of the curve.

6. Method according to claim 4 or 5, **characterized by** further comprising:

- determining, when a curve of the road is detected ahead of the vehicle, an estimation of reliability of curve detection,
wherein the threshold value (TH) is lowered according to the continuous decrease from the first threshold value ($TH_{dec\_max}$) to the second threshold value ($TH_{dec\_min}$) on the basis of an increase of the determined estimation of reliability of curve detection.

7. Method according to claim 4, 5 or 6, **characterized by** further comprising:

- determining, when a curve of the road is detected ahead of the vehicle, an estimation of a lateral acceleration ($G_{y\_est}$) at a preview point, which is located ahead of the vehicle at a predetermined preview distance ($L_{pv}$) or at a preview distance ($L_{pv}$) which is calculated on the basis of a predetermined preview time ($t_{pv}$) and the current speed of the vehicle, the estimated lateral acceleration ($G_{y\_est}$) at a preview point being calculated on the basis of an estimation of curvature of the road at the preview point and the current speed of the vehicle,
wherein the threshold value (TH) is lowered according to the continuous decrease from the first threshold value ($TH_{dec\_max}$) to the second threshold value ($TH_{dec\_min}$) on the basis of an increase of the determined estimation of the lateral acceleration ($G_{y\_est}$) at the preview point.

8. Method according to at least one of claims 1 to 7, **characterized by** further comprising:

- deactivating control of a longitudinal acceleration ($G_X$) of the vehicle on the basis of the determined lateral acceleration ($G_Y$) and lateral jerk ($\dot{G}_Y$), when the acceleration target value ($G_{XT\_GVC}$) or the lateral jerk ($\dot{G}_Y$) does not exceed the threshold value (TH).

9. Method according to at least one of claims 1 to 8, **characterized in that** the threshold value (TH) is lowered to a third threshold value ($TH_{dec\_GVC}$), when control of a longitudinal acceleration ($G_X$) of the vehicle on the basis of the determined lateral acceleration ($G_Y$) and lateral jerk ($\dot{G}_Y$) is activated.

10. Method according to claim 9 and at least one of claims 3 to 8, **characterized in that** the third threshold value ($TH_{dec\_GVC}$) is equal to or smaller than the second threshold value ($TH_{dec\_min}$).

11. Method according to at least one of claims 9 or 10, **characterized in that** the threshold value (TH) is increased, when control of a longitudinal acceleration ($G_X$) of the vehicle on the basis of the determined lateral acceleration ($G_Y$) and lateral jerk ($\dot{G}_Y$) is deactivated, or the threshold value (TH) is increased, when a hold time period ($t_{hold}$) expires after control of a longitudinal acceleration ($G_X$) of the vehicle on the basis of the determined lateral acceleration ($G_Y$) and lateral jerk ($\dot{G}_Y$) is deactivated.

12. Method according to at least one of claims 1 to 11, **characterized in that** detecting whether a curve of the road is ahead of the vehicle in the longitudinal direction comprises at least one of:

- detecting the curve of the road ahead of the vehicle on the basis of position data indicating the position of the vehicle and map data indicating geographical topology of a road network,
- detecting the curve of the road ahead of the vehicle on the basis of optically detecting a road sign indicating the curve ahead of the road,
- detecting the curve of the road ahead of the vehicle on the basis of optically tracking road markings ahead of the vehicle,
- detecting the curve of the road ahead of the vehicle on the basis of receiving curve information data from a transmitting road side unit located in the vicinity of the curve, and
- detecting the curve of the road ahead of the vehicle on the basis of receiving curve information data from another second vehicle located ahead of the vehicle, the second vehicle transmitting the curve information data during or after moving through the curve of the road.

13. Apparatus for performing driving assistance for a vehicle moving in a longitudinal direction on a road according to a method as described in at least one of claims 1 to 12, comprising:

- lateral acceleration determining means for determining a lateral acceleration ($G_Y$) of the vehicle, which is an acceleration of the vehicle in a lateral direction perpendicular to the longitudinal direction of the vehicle,

Hitachi. Ltd.

- lateral jerk determining means for determining a lateral jerk ($\dot{G}_Y$) of the vehicle, which is a jerk of the vehicle in the lateral direction, and

- longitudinal acceleration controlling means for controlling of a longitudinal acceleration ($G_X$) of the vehicle on the basis of the determined lateral acceleration ($G_Y$) and lateral jerk ($\dot{G}_Y$) based on a longitudinal acceleration target value ($G_{XT\_GVC}$) being calculated on the basis of the lateral jerk ($\dot{G}_Y$),

- activation/deactivation control means for activating control of the longitudinal acceleration ($G_X$) of the vehicle on the basis of the determined lateral acceleration ($G_Y$) and lateral jerk ($\dot{G}_Y$), when the acceleration target value ($G_{XT\_GVC}$) or the lateral jerk ($\dot{G}_Y$) exceeds a threshold value (TH),

**characterized by**

detecting means for detecting whether a curve of the road is ahead of the vehicle in the longitudinal direction, and

varying means for varying the threshold value (TH) on the basis of the result of the detecting whether a curve of the road is ahead of the vehicle.

14. Computer program product comprising computer program means for causing a vehicle control apparatus to execute the steps of a method according to at least one of claims 1 to 12.


**Patentansprüche**

1. Verfahren zum Ausführen einer Fahrunterstützung für ein sich in einer Längsrichtung auf einer Straße bewegendes Fahrzeug, das Folgendes umfasst:

Bestimmen einer Querbeschleunigung ($G_Y$) des Fahrzeugs, die eine Beschleunigung des Fahrzeugs in einer seitlichen Richtung senkrecht zur Längsrichtung des Fahrzeugs ist,

Bestimmen eines Querrucks ($\dot{G}_Y$) des Fahrzeugs, der ein Ruck des Fahrzeugs in der seitlichen Richtung ist, und Steuern einer Längsbeschleunigung ($G_X$) des Fahrzeugs auf der Grundlage der bestimmten Querbeschleunigung ($G_Y$) und des bestimmten Querrucks ($\dot{G}_Y$) auf der Grundlage eines auf der Grundlage des Querrucks ($\dot{G}_Y$) berechneten Längsbeschleunigungssollwerts ($G_{XT\_GVC}$),

Aktivieren des Steuerns der Längsbeschleunigung ($G_X$) des Fahrzeugs auf der Grundlage der bestimmten Querbeschleunigung ($G_Y$) und des bestimmten Querrucks ($\dot{G}_Y$) dann, wenn der Beschleunigungssollwert ($G_{XT\_GVC}$) oder der Querruck ($\dot{G}_Y$) einen Schwellenwert (TH) überschreitet,

**gekennzeichnet durch** das Detektieren ob eine Kurve der Fahrbahn in Längsrichtung vor dem Fahrzeug liegt, und

Variieren des Schwellenwerts (TH) auf der Grundlage des Ergebnisses des Detektierens, ob eine Kurve der Fahrbahn vor dem Fahrzeug liegt.

2. Verfahren nach Anspruch 1, **dadurch gekennzeichnet, dass** der Schwellenwert (TH) gesenkt wird, wenn vor dem Fahrzeug eine Kurve der Fahrbahn detektiert wird.

3. Verfahren nach Anspruch 1 oder 2, **dadurch gekennzeichnet, dass** der Betrag des Schwellenwertes (TH) von einem ersten Schwellenwert ($TH_{dec\_max}$) auf einen kleineren zweiten Schwellenwert ($TH_{dec\_min}$) gesenkt wird, wenn vor dem Fahrzeug eine Kurve der Fahrbahn detektiert wird.

4. Verfahren nach Anspruch 3, **dadurch gekennzeichnet, dass** der Betrag des Schwellenwertes (TH) entsprechend einer schrittweisen Abnahme vom ersten Schwellenwert ($TH_{dec\_max}$) auf den zweiten Schwellenwert ($TH_{dec\_min}$) gesenkt wird, wenn vor dem Fahrzeug eine Kurve der Fahrbahn detektiert wird; oder

der Schwellenwert (TH) entsprechend einer kontinuierlichen Abnahme vom ersten Schwellenwert ($TH_{dec\_max}$) auf den zweiten Schwellenwert ($TH_{dec\_min}$) gesenkt wird, wenn vor dem Fahrzeug eine Kurve der Fahrbahn detektiert wird.

5. Verfahren nach Anspruch 4, **dadurch gekennzeichnet, dass** es ferner Folgendes umfasst:

Bestimmen eines Abstands zwischen dem Fahrzeug und einem Eingang der Kurve dann, wenn vor dem Fahrzeug eine Kurve der Fahrbahn detektiert wird,

wobei der Schwellenwert (TH) auf der Grundlage einer Abnahme der bestimmten Entfernung zum Eingang der Kurve entsprechend der kontinuierlichen Abnahme vom ersten Schwellenwert ($TH_{dec\_max}$) auf den zweiten Schwellenwert ($TH_{dec\_min}$) abgesenkt wird.

6. Verfahren nach Anspruch 4 oder 5, **dadurch gekennzeichnet, dass** es ferner Folgendes umfasst:

Bestimmen einer Schätzung der Verlässlichkeit der Kurvendetektion dann, wenn vor dem Fahrzeug eine Kurve der Fahrbahn detektiert wird,
wobei der Schwellenwert (TH) auf der Grundlage einer Zunahme der bestimmten Schätzung der Verlässlichkeit der Kurvendetektion entsprechend der kontinuierlichen Abnahme vom ersten Schwellenwert ($TH_{dec\_max}$) auf den zweiten Schwellenwert ($TH_{dec\_min}$) abgesenkt wird.

7. Verfahren nach Anspruch 4, 5 oder 6, **dadurch gekennzeichnet, dass** es ferner Folgendes umfasst:

Bestimmen einer Schätzung einer Querbeschleunigung ($G_{y\_est}$) an einem in einer vorgegebenen Vorschauent-fernung ($L_{pv}$) oder in einer auf der Grundlage einer vorgegebenen Vorschauzeit ($t_{pv}$) und der aktuellen Fahr-zeuggeschwindigkeit berechneten Vorschauentfernung ($L_{pv}$) vor dem Fahrzeug liegenden Vorschaupunkt dann, wenn vor dem Fahrzeug eine Kurve der Fahrbahn detektiert wird, wobei die geschätzte Querbeschleunigung ($G_{y\_est}$) an einem Vorschaupunkt auf der Grundlage einer Schätzung der Krümmung der Fahrbahn am Vorschaupunkt und der aktuellen Fahrzeuggeschwindigkeit berechnet wird,
wobei der Schwellenwert (TH) auf der Grundlage einer Zunahme der bestimmten Schätzung der Querbeschleunigung ($G_{y\_est}$) am Vorschaupunkt entsprechend der kontinuierlichen Abnahme vom ersten Schwellenwert ($TH_{dec\_max}$) auf den zweiten Schwellenwert ($TH_{dec\_min}$) abgesenkt wird.

8. Verfahren nach mindestens einem der Ansprüche 1 bis 7, **dadurch gekennzeichnet, dass** es ferner Folgendes umfasst:

Deaktivieren des Steuerns einer Längsbeschleunigung ($G_X$) des Fahrzeugs auf der Grundlage der bestimmten Querbeschleunigung ($G_Y$) und des bestimmten Querrucks ($\dot{G}_Y$) dann, wenn der Beschleunigungssollwert ($G_{XT\_GVC}$) oder der Querruck ($\dot{G}_Y$) den Schwellenwert (TH) nicht überschreitet.

9. Verfahren nach mindestens einem der Ansprüche 1 bis 8, **dadurch gekennzeichnet, dass**
der Schwellenwert (TH) auf einen dritten Schwellenwert ($TH_{dec\_GVC}$) gesenkt wird, wenn das Steuern einer Längsbeschleunigung ($G_X$) des Fahrzeugs auf der Grundlage der bestimmten Querbeschleunigung ($G_Y$) und des be-stimmten Querrucks ($\dot{G}_Y$) aktiviert wird.

10. Verfahren nach Anspruch 9 und mindestens einem der Ansprüche 3 bis 8, **dadurch gekennzeichnet, dass**
der dritte Schwellenwert ($TH_{dec\_GVC}$) gleich oder kleiner dem zweiten Schwellenwert ($TH_{dec\_min}$) ist.

11. Verfahren nach mindestens einem der Ansprüche 9 oder 10, **dadurch gekennzeichnet, dass**
der Schwellenwert (TH) erhöht wird, wenn das Steuern einer Längsbeschleunigung ($G_X$) des Fahrzeugs auf der Grundlage der bestimmten Querbeschleunigung ($G_Y$) und des bestimmten Querrucks ($\dot{G}_Y$) deaktiviert wird, oder der Schwellenwert (TH) erhöht wird, wenn eine Haltefrist ($t_{hold}$) abläuft, nachdem das Steuern einer Längsbeschleunigung ($G_X$) des Fahrzeugs auf der Grundlage der bestimmten Querbeschleunigung ($G_Y$) und des bestimmten Querrucks ($\dot{G}_Y$) deaktiviert wird.

12. Verfahren nach mindestens einem der Ansprüche 1 bis 11, **dadurch gekennzeichnet, dass**
das Detektieren, ob eine Kurve der Fahrbahn in Längsrichtung vor dem Fahrzeug liegt, mindestens einen der folgenden Punkte umfasst:

Detektieren der Kurve der Fahrbahn vor dem Fahrzeug auf der Grundlage von die Position des Fahrzeugs anzeigenden Positionsdaten und von die geographische Topologie eines Fahrbahnnetzes anzeigenden Kartendaten,
Detektieren der Kurve der Fahrbahn vor dem Fahrzeug auf der Grundlage optischen Erkennens eines die vorausliegende Kurve der Fahrbahn anzeigenden Straßenschildes,
Detektieren der Kurve der Fahrbahn vor dem Fahrzeug auf der Grundlage optischen Verfolgens von Fahrbahnmarkierungen vor dem Fahrzeug,
Detektieren der Kurve der Fahrbahn vor dem Fahrzeug auf der Grundlage des Empfangs von Kurveninformationsdaten von einer sendenden fahrbahnseitigen Einheit, die sich in die Nähe der Kurve befindet, und Detektieren der Kurve der Fahrbahn vor dem Fahrzeug auf der Grundlage des Empfangs von Kurveninformationsdaten von einem anderen zweiten Fahrzeug, das sich vor dem Fahrzeug befindet, wobei das zweite Fahrzeug die Kurveninformationsdaten während oder nach dem Bewegen durch die Kurve der Fahrbahn sendet.

13. Vorrichtung zum Ausführen einer Fahrunterstützung für ein sich in einer Längsrichtung auf einer Straße bewegendes Fahrzeug nach einem in mindestens einem der Ansprüche 1 bis 12 beschriebenen Verfahren, die Folgendes umfasst:

Querbeschleunigungsbestimmungsmittel zum Bestimmen einer Querbeschleunigung ($G_Y$) des Fahrzeugs, die eine Beschleunigung des Fahrzeugs in einer seitlichen Richtung senkrecht zur Längsrichtung des Fahrzeugs ist, Querruckbestimmungsmittel zum Bestimmen eines Querrucks ($\dot{G}_Y$) des Fahrzeugs, der ein Ruck des Fahrzeugs in der seitlichen Richtung ist, und
Längsbeschleunigungssteuermittel zum Steuern einer Längsbeschleunigung ($G_X$) des Fahrzeugs auf der Grundlage der bestimmten Querbeschleunigung ($G_Y$) und des bestimmten Querrucks ($\dot{G}_Y$) auf der Grundlage eines auf der Grundlage des Querrucks ($\dot{G}_Y$) berechneten Längsbeschleunigungssollwerts ($G_{XT\_GVC}$),
Aktivierungs-/Deaktivierungssteuerungsmittel zum Aktivieren des Steuerns der Längsbeschleunigung ($G_X$) des Fahrzeugs auf der Grundlage der bestimmten Querbeschleunigung ($G_Y$) und des bestimmten Querrucks ($\dot{G}_Y$) dann, wenn der Beschleunigungssollwert ($G_{XT\_GVC}$) oder der Querruck ($\dot{G}_Y$) einen Schwellenwert (TH) überschreitet,
**dadurch gekennzeichnet, dass** Detektionsmittel zum Detektieren ob eine Kurve der Fahrbahn in der Längsrichtung vor dem Fahrzeug liegt, und
Variationsmittel zum Variieren des Schwellenwerts (TH) auf der Grundlage des Ergebnisses des Detektierens ob eine Kurve der Fahrbahn vor dem Fahrzeug liegt.

14. Computerprogrammprodukt, das Computerprogrammmittel zum Veranlassen einer Fahrzeugsteuerungsvorrichtung zum Ausführen der Schritte eines Verfahrens nach mindestens einem der Ansprüche 1 bis 12 umfasst.

**Revendications**

1. Procédé pour mettre en oeuvre une aide à la conduite pour un véhicule se déplaçant dans une direction longitudinale sur une route, comprenant les étapes consistant à :

- déterminer une accélération latérale ($G_Y$) du véhicule, qui est une accélération du véhicule dans une direction latérale perpendiculaire à la direction longitudinale du véhicule,
- déterminer une secousse latérale ($\dot{G}_Y$) du véhicule, qui est une secousse du véhicule dans la direction latérale, et
- commander une accélération longitudinale ($G_x$) du véhicule sur la base de l'accélération latérale ($G_Y$) et de la secousse latérale ($\dot{G}_Y$) déterminées basées sur une valeur cible de l'accélération longitudinale ($G_{XT\_GVC}$) qui est calculée sur la base de la secousse latérale ($\dot{G}_Y$),
- activer la commande de l'accélération longitudinale ($G_X$) du véhicule sur la base de l'accélération latérale ($G_Y$) et de la secousse latérale ($\dot{G}_Y$) déterminées, quand la valeur cible d'accélération ($G_{XT\_GVC}$) ou la secousse latérale ($\dot{G}_Y$) excède une valeur seuil (TH),
**caractérisé en ce que** l'on détecte si un virage de la route se trouve en avant du véhicule dans la direction longitudinale, et
- on fait varier la valeur seuil (TH) sur la base du résultat de la détection quant à savoir si un virage de la route se trouve en avant du véhicule.

2. Procédé selon la revendication 1, **caractérisé en ce que**

la valeur seuil (TH) est abaissée quand un virage de la route est détecté en avant du véhicule.

3. Procédé selon la revendication 1 ou 2, **caractérisé en ce que**

la valeur absolue de la valeur seuil (TH) est abaissée d'une première valeur seuil (TH-$_{dec-max}$) à une deuxième valeur seuil inférieure (TH-$_{dec-min}$) quand un virage de la route est détecté en avant du véhicule.

4. Procédé selon la revendication 3, **caractérisé en ce que**

la valeur absolue de la valeur seuil (TH) est abaissée, conformément à une diminution graduelle, de la première valeur seuil (TH-$_{dec-max}$) à la deuxième valeur seuil (TH-$_{dec-min}$) quand un virage de la route est détecté en avant du véhicule ; ou

la valeur seuil (TH) est abaissée, conformément à une diminution continue, de la première valeur seuil (TH-$_{dec-max}$) à la deuxième valeur seuil (TH-$_{dec-min}$) quand un virage de la route est détecté en avant du véhicule.

5. Procédé selon la revendication 4, **caractérisé en ce qu'**il comprend en outre l'étape consistant à :

- déterminer, quand un virage de la route est détecté en avant du véhicule, une distance entre le véhicule et l'entrée du virage,

dans lequel la valeur seuil (TH) est abaissée, conformément à la diminution continue, de la première valeur seuil (TH-$_{dec-max}$) à la deuxième valeur seuil (TH-$_{dec-min}$) sur la base d'une diminution de la distance déterminée par rapport à l'entrée du virage.

6. Procédé selon la revendication 4 ou 5, **caractérisé en ce qu'**il comprend en outre l'étape consistant à :

- déterminer, quand un virage de la route est détecté en avant du véhicule, une estimation de la fiabilité de la détection du virage,

dans lequel la valeur seuil (TH) est abaissée, conformément à la diminution continue, de la première valeur seuil (TH-$_{dec-max}$) à la deuxième valeur seuil (TH-$_{dec-min}$) sur la base d'une augmentation de l'estimation déterminée de la fiabilité de la détection du virage.

7. Procédé selon la revendication 4, 5 ou 6, **caractérisé en ce qu'**il comprend en outre l'étape consistant à :

- déterminer, quand un virage de la route est détecté en avant du véhicule, une estimation d'une accélération latérale (G$_{Y\_est}$) à un point de prévisualisation, qui est situé en avant du véhicule à une distance de prévisualisation prédéterminée (L$_{pv}$) ou à une distance de prévisualisation (L$_{pv}$) qui est calculée sur la base d'un temps de prévisualisation prédéterminé (t$_{pv}$) et de la vitesse instantanée du véhicule, l'accélération latérale estimée (G$_{Y\_est}$) à un point de prévisualisation étant calculée sur la base d'une estimation d'une courbure de la route à un point de prévisualisation et de la vitesse instantanée du véhicule,

dans lequel la valeur seuil (TH) est abaissée, conformément à la diminution continue, de la première valeur seuil (TH-$_{dec-max}$) à la deuxième valeur seuil (TH-$_{dec-min}$) sur la base d'une augmentation de l'estimation déterminée de l'accélération latérale (G$_{Y\_est}$) au point de prévisualisation.

8. Procédé selon l'une au moins des revendications 1 à 7, **caractérisé en ce qu'**il comprend en outre l'étape consistant à :

- désactiver la commande d'une accélération longitudinale (G$_x$) du véhicule sur la base de l'accélération latérale (G$_Y$) et de la secousse latérale ($\dot{G}_Y$) déterminées quand la valeur cible de l'accélération (G$_{XT\_GVC}$) ou la secousse latérale ($\dot{G}_Y$) n'excède pas la valeur seuil (TH).

9. Procédé selon l'une au moins des revendications 1 à 8, **caractérisé en ce que**
la valeur seuil (TH) est abaissée à une troisième valeur seuil (TH-$_{dec-GVC}$), quand la commande d'une accélération longitudinale (G$_x$) du véhicule sur la base de l'accélération latérale (G$_Y$) et de la secousse latérale ($\dot{G}_Y$) déterminées est activée.

10. Procédé selon la revendication 9 et l'une au moins des revendications 3 à 8, **caractérisé en ce que**
la troisième valeur seuil (TH-$_{dec-GVC}$) est inférieure ou égale à la deuxième valeur seuil (TH-$_{dec-min}$).

11. Procédé selon l'une au moins des revendications 9 ou 10, **caractérisé en ce que**
la valeur seuil (TH) est augmentée quand la commande d'une accélération longitudinale (G$_x$) du véhicule sur la base de l'accélération latérale (G$_Y$) et de la secousse latérale ($\dot{G}_Y$) déterminées est désactivée, ou
la valeur seuil (TH) est augmentée quand un laps de temps de maintien (t$_{hold}$) expire après la désactivation de la commande d'une accélération longitudinale (G$_x$) du véhicule sur la base de l'accélération latérale (G$_Y$) et de la secousse latérale ($\dot{G}_Y$) déterminées.

12. Procédé selon l'une au moins des revendications 1 à 11, **caractérisé en ce que**
l'étape de détection quant à savoir si un virage de la route se trouve en avant du véhicule dans la direction longitudinale comprend au moins l'une des étapes consistant à :

- détecter le virage de la route en avant du véhicule sur la base des données de position indiquant la position du véhicule et des données cartographiques indiquant la topologie géographique d'un réseau routier,
- détecter le virage de la route en avant du véhicule sur la base de la détection optique d'un panneau routier indiquant le virage de la route en avant du véhicule,
- détecter le virage de la route en avant du véhicule sur la base du suivi optique des marquages de la route en avant du véhicule,
- détecter le virage de la route en avant du véhicule sur la base de la réception de données d'information sur le virage provenant d'une unité de transmission côté route située à proximité du virage, et
- détecter le virage de la route en avant du véhicule sur la base de la réception de données d'information sur le virage provenant d'un deuxième véhicule situé en avant du véhicule, le deuxième véhicule transmettant les données d'information sur le virage pendant ou après le passage du virage de la route.

13. Appareil permettant de mettre en oeuvre une aide à la conduite pour un véhicule se déplaçant dans une direction longitudinale sur une route selon le procédé décrit dans l'une au moins des revendications 1 à 12, comprenant :

- des moyens déterminant une accélération latérale permettant de déterminer une accélération latérale ($G_Y$) du véhicule, qui est une accélération du véhicule dans une direction latérale perpendiculaire à la direction longitudinale du véhicule,
- des moyens déterminant une secousse latérale permettant de déterminer une secousse latérale ($\dot{G}_Y$) du véhicule, qui est une secousse du véhicule dans la direction latérale, et
- des moyens de commande d'une accélération longitudinale permettant de commander une accélération longitudinale ($G_x$) du véhicule sur la base de l'accélération latérale ($G_Y$) et de la secousse latérale ($\dot{G}_Y$) déterminées basées sur une valeur cible de l'accélération longitudinale ($G_{XT\_GVC}$) qui a été calculée sur la base de la secousse latérale ($\dot{G}_Y$),
- des moyens de commande d'activation / de désactivation permettant d'activer la commande de l'accélération longitudinale ($G_X$) du véhicule sur la base de l'accélération latérale ($G_Y$) et de la secousse latérale ($\dot{G}_Y$) déterminées, quand la valeur cible d'accélération ($G_{XT\_GVC}$) ou la secousse latérale ($\dot{G}_Y$) excède une valeur seuil (TH),

**caractérisé par**
des moyens de détection permettant de détecter un éventuel virage de la route en avant du véhicule dans la direction longitudinale,
et
des moyens de variation permettant de faire varier la valeur seuil (TH) sur la base du résultat de la détection d'un éventuel virage de la route en avant du véhicule.

14. Produit de programme d'ordinateur comprenant des moyens de programme d'ordinateur permettant à un appareil de commande d'un véhicule d'exécuter les étapes d'un procédé selon l'une au moins des revendications 1 à 12.

Fig. 1

Fig. 2

Fig. 3

Fig. 4

Fig. 5

Fig. 6

```
        ┌──────────┐
        │  start   │
        └──────────┘
             │
S100         ▼
  ┌────────────────────────┐
  │     detect G_Y         │
  └────────────────────────┘
             │
S200         ▼
  ┌────────────────────────┐
  │     detect curve       │
  │     information        │
  └────────────────────────┘
             │
S300         ▼
  ┌────────────────────────┐
  │   set the parameter    │
  │        value           │
  └────────────────────────┘
             │
S400         ▼
  ┌────────────────────────┐
  │  calculate G_{XT_GVC}  │
  └────────────────────────┘
             │
S500         ▼
  ┌────────────────────────┐
  │   send G_{XT_GVC}      │
  └────────────────────────┘
             │
             ▼
        ┌──────────┐
        │  return  │
        └──────────┘
```

Fig. 7

$P_V(X_V, Y_V)$

$P_N(X_N, Y_N)$

$P_0(X_0, Y_0)$   $P_1(X_1, Y_1)$   $P_2(X_2, Y_2)$   $P_3(X_3, Y_3)$

$P_{NMAX}(X_{NMAX}, Y_{NMAX})$

Fig. 8

ROAD CURVATURE $k$

$K_V$   $K_1$   $K_2$   $K_3$   $K_N$   $K_{NMAX}$

DISTANCE FROM VEHICLE

Fig. 9

~100

Fig. 10

101   102   103   104   105

## Fig. 11

## Fig. 12

## Fig. 13

## Fig. 14

Fig. 15

Fig. 16

## Fig. 17

$T1: TH_{dec\_GVC}$ ; $T2: TH_{dec\_min}$ ; $T3: TH_{dec\_Max}$

## Fig. 18

## Fig. 19

## Fig. 20

**Fig. 21**

**Fig. 22**

$T_4 : TH_{ACC\_GVC} \; ; \; T_5 : TH_{ACC\_MAX}$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1992537 A2
- EP 2484572 A1
- EP 2492160 A1